(19) Europäisches Patentamt
European Patent Office
Office européen des brevets

(11) EP 1 705 924 A1

(12) **EUROPEAN PATENT APPLICATION**
published in accordance with Art. 158(3) EPC

(43) Date of publication:
**27.09.2006 Bulletin 2006/39**

(21) Application number: **04819961.6**

(22) Date of filing: **06.12.2004**

(51) Int Cl.:
***H04N 7/32*** *(2006.01)*

(86) International application number:
**PCT/JP2004/018152**

(87) International publication number:
**WO 2005/055613 (16.06.2005 Gazette 2005/24)**

(84) Designated Contracting States:
**DE FR GB IT**

(30) Priority: **04.12.2003 JP 2003406334**

(71) Applicant: **NEC Corporation**
**Minato-ku**
**Tokyo 1088001 (JP)**

(72) Inventor: **KIMOTO, Takahiro**
**c/o NEC Corporation**
**Tokyo 1088001 (JP)**

(74) Representative: **Vossius & Partner**
**Siebertstrasse 4**
**81675 München (DE)**

# (54) MOVING PICTURE ENCODING METHOD AND DEVICE, AND MOVING PICTURE DECODING METHOD AND DEVICE

(57) A method of coding a moving picture for performing hierarchical coding comprises the steps of performing a first process on an input picture signal and thereafter spatially dividing the input picture signal into layers to obtain a first signal, reducing the input picture signal with a resolution converting filter and thereafter performing a second process on the input picture signal at a reduced resolution to obtain a second signal, and coding the first signal and the second signal. The first and second processes are first and second temporal filtering processes, for example, and the first and second signals are a temporally filtered lower-layer signal and a higher-layer temporally filtered signal, respectively.

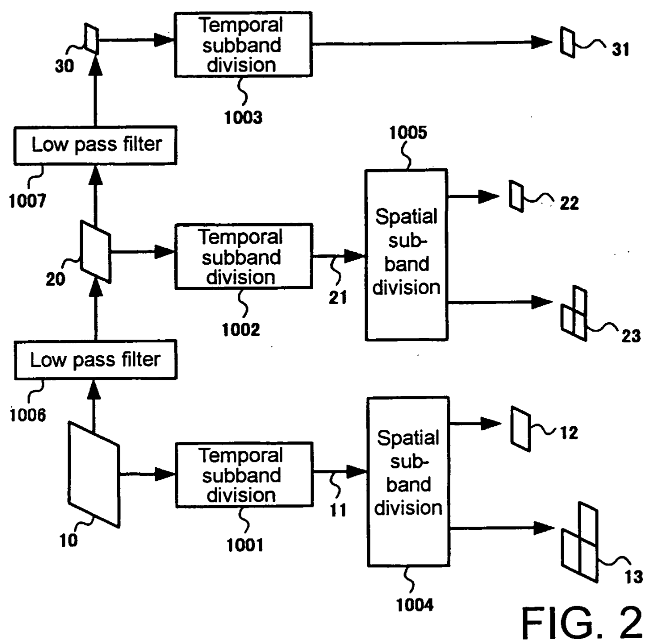


FIG. 2

EP 1 705 924 A1

## Description

Technical field:

The present invention relates to a method of and an apparatus for coding a moving picture; and a method of and an apparatus for decoding a coded moving picture.

Background art:

Various processes for coding moving pictures are known. Of these processes, a subband coding process is a process for frequency-dividing a picture signal and coding signals in respective frequency bands, i.e., subband signals. Unlike block-base orthogonal transform such as discrete cosine transform, the subband coding process has features that it does not produce block distortions in principle and divides a low-frequency component recursively for easy hierarchical coding. In the field of still images, JPEG 2000, which is an international standard for coding process, employs a subband coding process using wavelet transform.

If a subband coding process is applied to code a moving picture, then it is necessary to taken into account not only spatial correlation of signals, but also temporal correlation of signals. For subband moving picture coding, there have mainly been proposed two processes, i.e., a process for performing motion compensation on an original picture in spatial domain to remove a temporal correlation and thereafter performing subband coding on each frame (see, for example, J. R. Ohm, "Three-dimensional subband coding with motion compensation," IEEE Trans. Image Processing, Vol. 3, pp. 559-571, Sept. 1999), and a process for performing subband dividing on an original picture and thereafter performing motion compensation on each subband region to remove a temporal correlation.

Fig. 1 is a flowchart illustrative of a conventional coding process with motion compensation in spatial domain. A coding process for a set $A^{(0)}[i]$ ($0 \le i < n$, n is the power of 2) of successive frames will be described with reference to Fig. 1.

In steps 201, 202, j=0, i=0, 2, ..., n-2. In steps 203 to 205, successive two frames $A^{(0)}[i]$, $A^{(0)}[i+1]$ are temporally divided into subbands, producing $A^{(1)}[i]$ in the low-frequency band and E[i+1] in the high-frequency band. Then, in step 206, 1 is added to j, and successive signals $A^{(1)}[i<<1]$, $A^{(1)}[(i+1)<<1]$ in the low-frequency band are temporally divided into subbands, producing $A^{(2)}[i<<1]$ in the tow-frequency band and E[(i+1)<<1] in the high-frequency band. The above sequence is repeated until frames other than the first frame are coded as a signal in the high-frequency band, i.e., until (1<<j) becomes n, as indicated in step 207. Thereafter, in step 208, $A^{(j)}[0]$, E[i] ($0<j<n$) are spatially divided into subbands and coded.

In the temporal subband division between two frames, a signal in the high-frequency band corresponds to an error signal for motion compensation prediction and a signal in the low-frequency band to an average signal of motion-compensated two frames. Upon a decoding processing, the above process is reversed to spatially combine subband signals for each frame and thereafter temporally combine subbands according to the frame reference relationship. In three-dimensional wavelet coding, frame signals produced by partially combining subbands without using subbands of high-frequency components can be temporally combined in subbands to obtain a decoded picture at a reduced resolution. In this case, since the corresponding relationship between pixels in frames in motion compensation has to be maintained, the motion information obtained at an original resolution is used as it is except that it is reduced only in scale.

Disclosure of the invention:

Problems to be solved by the invention:

According to scalable coding, a stream having a low bit rate can be generated from an original stream by removing codes corresponding to subbands of high-frequency components from the original stream. When the newly generated stream is decoded, a picture represented by the reduced input signal is reconstructed. According to the conventional technology, the motion information obtained at an original resolution is used for decoding at a reduced resolution. Therefore, the amount of codes required for motion information is relatively increased, resulting in a reduction in coding efficiency. Especially, since most of the amount of codes is assigned to motion information at a low bit rate, the picture quality is made lower than if scalability is not applied.

Conversely, with motion information determined at a reduced resolution so as to be optimized for a low bit rate, the coding efficiency at an original resolution is lowered. If the amount of codes required for motion information is reduced according to a process such as integrating coefficient information as it is, then the quality of pictures is greatly reduced due to motion compensation discrepancies.

Therefore, it is an object of the present invention to provide a moving picture coding technology for achieving a higher coding efficiency in a coded stream having a hierarchical structure than the conventional technology while maintaining the hierarchical structure.

Another object of the present invention is to provide a moving picture coding technology for suppressing a reduction in the quality of pictures due to motion compensation discrepancies.
Still another object of the present invention is to provide a technology for decoding moving picture data which have been coded by such a moving picture coding technology.

Means for solving the problems:

According a first aspect of the present invention, a method of coding a moving picture is a method of coding a moving picture for performing hierarchical coding, and comprises the steps of performing a first process on an input picture signal and thereafter spatially dividing the input picture signal into layers to obtain a first signal, reducing the input picture signal with a resolution converting filter and thereafter performing a second process on the input picture signal at a reduced resolution to obtain a second signal, and coding the first signal and the second signal.
According a second aspect of the present invention, a method of coding a moving picture is a method of coding a moving picture for performing hierarchical coding, and comprises the steps of performing a temporal-spatial hierarchical dividing process to divide an input picture signal into a first signal which is obtained by performing a first process on the input picture signal and thereafter spatially dividing the input picture signal into layers and a second signal which is obtained by performing a second process at a reduced resolution on a reduced input picture signal which is produced when the input picture signal is reduced by a resolution converting filter, and recursively performing the temporal-spatial hierarchical dividing process on the reduced input picture signal and thereafter coding signals in the respective layers.
In these inventions, for example, the first and second processes comprise first and second temporal filtering, respectively, the first signal comprises a temporally filtered lower-layer signal, and the second signal comprises a higher-layer temporally filtered signal. Alternatively, the first process comprises a first motion compensating process, the second process comprises a second motion compensating process, the first signal comprises a prediction error lower-layer signal, and the second signal comprises a higher-layer prediction error signal.
According a third aspect of the present invention, a method of coding a moving picture comprises the step of performing, a plurality of times, a three-dimensional subband dividing process for temporally dividing an input picture signal into subbands and spatially dividing the input picture signal into subbands, the three-dimensional subband dividing process comprising the motion information calculating step of calculating motion information representative of a motion between frames of the input picture signal and between bands of an intraband signal which is a band signal of one of low-frequency subbands produced by dividing the input picture signal into subbands, the temporal subband dividing step of temporally dividing the input picture signal and the intraband signal into subbands after the input picture signal and the intraband signal are motion-compensated according to the motion information obtained in the motion information calculating step, thereby generating a temporal low-frequency subband signal and a temporal high-frequency subband signal, the temporal high-frequency subband signal spatially dividing step of spatially dividing temporal high-frequency subband signal into subbands, thereby generating a temporal high-frequency, spatial low-frequency subband and a temporal high-frequency, spatial high-frequency subband, the temporal low-frequency subband signal spatially dividing step of spatially dividing temporal low-frequency subband signal into subbands, thereby generating a temporal low-frequency, spatial low-frequency subband and a temporal low-frequency, spatial high-frequency subband, and the band signal spatially dividing step of spatially dividing the intraband signal into subbands, thereby generating a low-frequency intrasubband and a high-frequency intrasubband, wherein the temporal subband dividing step, the temporal high-frequency subband signal spatially dividing step, the temporal low-frequency subband signal spatially dividing step, and the band signal spatially dividing step are performed on the input picture signal, the low-frequency intrasubband obtained after the band signal spatially dividing step is used as the intraband signal, and the temporal subband dividing step, the temporal high-frequency subband signal spatially dividing step, the temporal low-frequency subband signal spatially dividing step, and the band signal spatially dividing step are recursively repeated, and each time these steps are repeated, the temporal low-frequency, spatial low-frequency subband and the temporal high-frequency, spatial low-frequency subband are replaced respectively with the temporal low-frequency subband signal and the temporal high-frequency subband signal that are obtained in the temporal subband dividing step performed immediately thereafter.
According another aspect of the present invention, a method of decoding a moving picture is a method of decoding a moving picture to decode hierarchical coded data, and comprises the steps of decoding a first signal processed by a first process, a third signal produced when a second signal produced from a second process is spatially divided into layers, and processing information representing the second process, generating a fourth signal from the first signal and the processing information, and combining the third signal and the fourth signal with each other and thereafter performing inverse transform of the second process to obtain a decoded picture.
In this decoding method, for example, the first and second processes comprise first and second temporal filtering, respectively, the first signal comprises a higher-layer temporally filtered signal, the second signal comprises a temporally filtered signal, the third signal comprises a temporally filtered lower-layer signal, the fourth signal comprises a temporally filtered higher-layer signal, and the processing information comprises temporally filtering information. Alternatively, the first and second processes comprise first and second motion compensating processes, respectively, the first signal comprises a higher-layer prediction error signal, the second signal comprises a prediction error signal, the third signal comprises a prediction error lower-layer signal, the fourth signal comprises a prediction error higher-layer signal, and the processing information comprises motion information.

According still another aspect of the present invention, a method of decoding a moving picture to obtain a decoded picture by combining layers of hierarchical coded data for each frame and thereafter temporally inverse-filtering the data, comprises the steps of decoding a higher-layer temporally filtered signal which is produced by first temporal filtering, a temporally filtered lower-layer signal produced when a temporally filtered signal which is produced by second temporal filtering is spatially divided into layers, and temporal filtering information representing the second temporal filtering, generating a temporally filtered higher-layer signal from the higher-layer temporally filtered signal and the temporal filtering information, performing a temporally filtered signal combining process to combine the temporally filtered higher-layer signal and the temporally filtered lower-layer signal to generate a combined temporally filtered signal, and producing a decoded picture by regarding the combined temporally filtered signal as the higher-layer temporally filtered signal, decoding the temporal filtering information and the temporally filtered lower-layer signal in a layer lower than a layer of interest, recursively performing the temporally filtered signal combining process, and thereafter performing temporally inverse-filtering.

According yet another aspect of the present invention, a method of decoding a moving picture comprises the step of generating a decoded picture signal according to a three-dimensional subband combining process for spatially combining subband signals for each frame and thereafter performing temporal subband combining process for temporally combining a temporal low-frequency subband and a temporal high-frequency subband, the three-dimensional subband combining process comprising the temporal high-frequency subband combining step of generating a combined temporal high-frequency subband signal by referring to a temporal high-frequency, spatial low-frequency signal which is a spatial low-frequency signal of a temporal high-frequency subband, and a temporal high-frequency, spatial high-frequency subband which is subband of a high-frequency band adjacent to the low-frequency signal, and additionally both or either one of a temporal low-frequency, spatial low-frequency subband which is in the same frequency band as the temporal high-frequency, spatial low-frequency signal, and a temporal low-frequency, spatial high-frequency subband which is a subband of a high-frequency band adjacent to the subband signal, and motion information representing a motion compensating process corresponding to the temporal high-frequency subband, the temporal low-frequency subband spatially combining step of combining the temporal low-frequency, spatial low-frequency subband and the temporal low-frequency, spatial high-frequency subband, and the temporally combining step of performing a motion compensation predicting process on the temporal low-frequency subband and the temporal high-frequency subband, and thereafter performing temporal subband combination, wherein the temporal high-frequency subband combining step is performed on the temporal high-frequency, spatial low-frequency signal which is in the lowest frequency band of the temporal high-frequency subband, and the temporal low-frequency subband spatially combining step is performed on the temporal low-frequency; spatial low-frequency subband which is in the lowest frequency band of the temporal low-frequency subband, and the band signal obtained by the temporal high-frequency subband combining step is regarded as a new temporal high-frequency, spatial low-frequency signal, and the band signal obtained by the temporal low-frequency subband spatially combining step is regarded as a new temporal low-frequency, spatial low-frequency subband, the temporal high-frequency subband spatially combining step and the temporal low-frequency subband spatially combining step are recursively repeated, producing the temporal low-frequency subband and the temporal high-frequency subband.

According to the present invention, a coded stream having a hierarchical structure is motion-compensated based on motion information which is different from layer to layer. According to the present invention, for reconstructing low-rate coded data, except for a high-frequency component, of coefficient information, motion information corresponding to a motion compensation at a high resolution is deleted for achieving a higher coding efficiency than heretofore while maintaining the hierarchical structure. A reduction in the picture quality due to motion compensation discrepancies is greatly reduced by correcting a low-frequency component based on the motion compensation at the high resolution.

Brief description of the drawings:

Fig. 1 is a flowchart of the processing sequence of a conventional coding process with motion compensation in spatial domain;
Fig. 2 is a diagram showing an arrangement of a moving picture coding apparatus according to an embodiment of the present invention;
Fig. 3 is a flowchart of the processing sequence of a moving picture coding method according to the embodiment of the present invention;
Fig. 4 is a flowchart of a process of temporal-spatial subband division of two frames in Fig. 3;

Fig. 5 is a diagram showing an arrangement of a moving picture decoding apparatus according to an embodiment of the present invention;

Fig. 6 is a flowchart of the processing sequence of a moving picture decoding method according to the embodiment of the present invention;

Fig. 7 is a flowchart of a process of temporal-spatial subband combination of two frames in Fig. 6; and

Fig. 8 is a schematic diagram showing a computer system for implementing the arrangements of the moving picture coding apparatus and the moving picture decoding apparatus.

Best mode for carrying out the invention:

According to the present invention, for hierarchical coding, a temporal filtering lower-layer signal obtained by performing first temporal filtering and thereafter spatial hierarchical division, and a higher-layer temporal filtering signal obtained by reducing an input picture signal with a resolution converting filter and thereafter performing second temporal filtering at a reduced resolution, are coded. Alternatively, according to the present invention, a prediction error lower-layer signal obtained by performing first motion compensation and thereafter spatial hierarchical division, and a higher-layer error prediction signal obtained by reducing an input picture signal with a resolution converting filter and thereafter performing second temporal filtering at a reduced resolution, are coded. Namely, the present invention is characterized in that motion compensation is effected on a coding stream having a hierarchical structure based on motion information that is different between the layers. Here, motion information refers to information with respect to a translation of each of blocks of fixed size or variable size which make up a frame, or information with respect to a geometrical transformation such as an affine transformation into each of small areas making up a frame, or information with respect to a geometrical transformation such as an affine transformation on a frame in its entirety.

Specific embodiments of the present invention will be described below.

First, moving picture coding according to the present invention will be described below.

Fig. 2 shows an arrangement of a moving picture coding apparatus according to an embodiment of the present invention, and also shows a hierarchical structure of a signal produced after two frames, which are part of an input picture signal, are temporally and spatially divided into subbands.

The moving picture coding apparatus comprises first to third dividers 1001 to 1003 for performing temporal subband division, fourth and fifth dividers 1004, 1005 for performing spatial subband division, and first and second low-pass filters 1006, 1007. Input picture signal 10 is supplied to first divider 1001 and first low-pass filter 1006. Output 11 of first divider 1001 is supplied to fourth divider 1004. Output 20 of first low-pass filter 1006 is supplied to second divider 1002 and second low-pass filter 1007. Output 21 of second divider 1002 is supplied to fifth divider 1005. Output 30 of second low-pass filter 1007 is supplied to third divider 1003.

In the moving picture coding apparatus, input picture signal 10 is temporally divided into subbands by first divider 1001, and thereafter spatially divided into subbands at a single stage, thereby generating low-frequency subband signal 12 and high-frequency subband signal 13. When input picture signal 10 passes through first low-pass filter 1006, intrasubband signal 20 is generated. Intrasubband signal 20 is temporally divided into subbands by third divider 1002, generating low-frequency temporal subband signal 21. Low-frequency subband signal 12 generated by fourth divider 1004 is replaced with low-frequency temporal subband signal 21. Namely, the results of the single-stage hierarchical division of input picture signal 10 are high-frequency subband signal 13 and low-frequency temporal subband signal 21 according to the Similarly, the results of the single-stage hierarchical division of low-frequency temporal subband signal 21 are high-frequency subband signal 23 of low-frequency temporal subband signal 21 and low-frequency temporal subband signal 31 which is generated by temporally dividing low-frequency subband signal 30 of intrasubband signal 20. The above hierarchical division is performed recursively to realize a multiple hierarchical structure.

Each of low-pass filters 1006, 1007 may comprise either one of a general down-sampling filter for reducing a resolution horizontally and vertically to 1/2 and a low-pass filter in fourth and fifth dividers 1004, 1005 which perform spatial subband division. Hereinafter, a coding process with such a hierarchical structure will be described below on the assumption that the low-pass filters for spatial subband division are used.

Fig. 3 is a flowchart showing a coding process according to the present embodiment. The coding process for coding a set $A^{(0)}[i](0 \leq i < n$, n is the power of 2) of successive frames used as an original picture input will be described below with reference to Fig. 3.

First, in steps 101, 102, j = 0, i = 0, 2, ···, n-2. In step 103, successive two frames $A^{(0)}[i]$, $A^{(0)}[i+1]$ are temporally and spatially divided into subbands, producing subband signals $A^{(1)*}[i]$, $E^{*}[i+1]$ and motion information V[i+1].

Fig. 4 is a flowchart of the processing sequence of the temporal-spatial subband division of two frames in step 103 shown in Fig. 3. It is assumed that frame B0 is a past frame with respect to frame C0, and a general process of temporal-spatial subband division on frames B0, C0 will be described below with reference to Fig. 4.

First, in step 111, a motion of frame B0 with respect to frame C0 is estimated to produce motion information V0. A motion refers to a translation of each of blocks of fixed size or variable size which make up the frame, or a geometrical transformation such as an affine transformation into each of small areas making up a frame, or a geometrical transformation such as an affine transformation on a frame in its entirety.

Next, in step 112, based on motion information V0, frames B0, C0 are temporally divided into subbands to generate low-frequency subband $A0^*$ and high-frequency subband $E0^*$. As a temporal subband division process, a process disclosed in A. Secker et al., "Motion-compensated highly scalable video compression using an adaptive 3D wavelet transform based on lifting," IEEE Trans. Int. Conf. Image Proc., pp. 1029-1032, October, 2001 will be described below.

If it is assumed that a pixel value at intraframe coordinates [p,q] in frame B0 is represented by B0[p,q], a pixel value at intraframe coordinates [p,q] after frame B0 has been motion-compensated based on the motion estimated in step 111 by $W_{B0}(B0)[p,q]$, and a pixel value at intraframe coordinates [p,q] after frame C0 has been motion-compensated by $W_{C0}(C0)[p,q]$, then the following equations are satisfied:

$$E0^*[p,q] = 1/2(C0[p,q] - W_{B0}(B0)[p,q] \quad (1)$$

$$A0^*[p,q] = B0[p,q] + W_{C0}(E0^*)[p,q] \quad (2)$$

According to another temporal subband division process, if a filter having temporal filter length longer than 2 is used, then assuming that filters for dividing a plurality of input frames $B0_i$ into low- and high-frequency bands are represented respectively by fl[i] (0≤i<nl), fh[i] (0≤i<nh), $A0^*$ and $E0^*$ are expressed as follows:

$$A0^*[p,q] = \sum_{i=0}^{nl-1} fl[i] \cdot W_{B0i}(B0_i)[p,q] \quad (1')$$

$$E0^*[p,q] = \sum_{j=0}^{nh-1} fh[i] \cdot W_{B0j}(B0_j)[p,q] \quad (2')$$

L. Lio et al., "Motion Compensated Lifting Wavelet And Its Application in Video Coding," IEEE Int. Conf. Multimedia & Expo 2001, Aug., 2001 shows motion compensation upon the processing of each filter in a lifting process for realizing high-order subband division with a superposition of primary filters. According to the disclosed process, if even-numbered frames of a plurality of input frames are represented by $B0_i$ and odd-numbered frames by $C0_i$, then frames $B0'_i$, $C0'_i$ after being multiplied by primary filters are expressed with constants α, β as follows:

$$C0'_i[p,q] = C0_i[p,q] + \alpha(W_{B0i}(B0_i + W_{B0i}+1(B0_{i+1}))[p,q] \quad (1'')$$

$$B0'_i[p,q] = B0_i[p,q] + \beta(W_{C0i}(C0_i + W_{C0i}-1(C0_{i-1}))[p,q] \quad (2'')$$

By alternately repeating the two filter processes, temporal subband division using the lifting process is performed. There is known another process which is equivalent to the ordinary motion compensation prediction without generating $A0^*$ of low-frequency components.

After $A0^*$, $E0^*$ are obtained, they are spatially divided into subbands once in step 113.

If dual frequency division is performed as subband division using a one-dimensional filter bank, then there are generated four subbands, i.e., a subband divided both horizontally and vertically into low-frequency bands, a subband divided horizontally into a low-frequency band and vertically into a high-frequency band, a subband divided horizontally into a high-frequency band and vertically into a low-frequency band, and a subband divided both horizontally and vertically into high-frequency bands. These subband transforms are defined respectively as LL(), LH(), HL(), HH(). A set of three subbands LH(C0), HL(C0), HH(C0) is defined as H(C0). According to these definitions, $LL(A0^*)$, $H(A0^*)$, $LL(E0^*)$, $H(E0^*)$

are obtained.

Thereafter, in step 115, frames B0, C0 are spatially divided into subbands in one layer, producing LL(B0), H (B0), LL(C0), H(C0). LL(B0), LL(C0) are defined as B1, C1, respectively. In step 116, motion information V1 representing a motion compensation between these subbands is newly calculated.

Motion information calculating processes include a process for estimating a motion anew and a process for integrating some motion information corresponding to B0, C0. Particularly, hierarchical coding with coefficient code information and motion information being associated with each other can be realized by performing hierarchical coding on motion information and using motion information corresponding to only its base layer.

According to a process for performing hierarchical coding on V1, V2, for example, motion information obtained by estimating a motion in a picture having a reduced resolution is represented by V2, motion information obtained by estimating a motion in an original picture by V1, and information produced by subtracting a twofold of V2 from V1 and V2 are coded. Furthermore, as with subband coding, motion information is divided into subbands in x and y directions of the picture to provide a hierarchical representation of the motion information.

In step 117, based on the information thus obtained, B1, C1 are temporally divided into subbands, producing low-frequency subband $A1^*$ and high-frequency subband $E1^*$. It should be noted that $A1^*$ is not equal to LL($A0^*$) and $E1^*$ is not equal to LL($E0^*$).

After $A1^*$,$E1^*$ are obtained, if the number of spatial subband divisions is 1 in step 118, then $A1^*$ is used as the division result instead of LL($A0^*$), H(B0) is used as the divided result instead of H($A0^*$), and $E1^*$ is used as the divided result instead of LL($E0^*$). If the number of spatial subband divisions is not 1, then $A1^*$, $E1^*$ are spatially divided into subbands once, generating LL($A1^*$), H($A1^*$), LL($E1^*$), H($E1^*$) in step 119. Thereafter, control goes back to step 115 in which B1, C1 are divided into subbands once. In step 116, motion information V2 is calculated with respect to obtained B2, C2. Thereafter, temporal subband division with motion compensation is performed in step 117.

The above process is carried out until the number of divisions becomes m as shown in step 118. Then, in step 121, obtained LL($Am^*$), H($Ak^*$), LL($Em^*$), H($Ek^*$) ($0 \le k < m$) are used as the division results. In step 122, Vk ($0 \le k < m$) is output as motion information of the entire subband division on the two frames, after which the process is put to an end. In this manner, the subband division in step 103 is finished.

The coding process in the present embodiment shown in Fig. 3 will further be described below.

After step 103, $A^{(0)*}[0]$, which is temporal low-frequency subband, is subjected to Spatial subband combination to generate $A^{(1)}[0]$ in step 105. This is to allow $A^{(1)}[0]$ to be temporally divided into subbands according to the processing in step 103 in a temporal layer that is one level higher.

In steps 106, 107, the processing in steps 103, 105 is performed on $A^{(0)}[n-2]$, $A^{(0)}[n-1]$. Thereafter, in step 108, j is incremented by 1. With i = 0, 2, ..., n/2-2, the temporal subband division of $A^{(1)}[i<<1]$ and $A^{(1)}[(i+1)<<1]$ (step 103) and the spatial subband combination of $A^{(1)*}[i<<1]$ (step 105) are repeated.

The above processing loop is performed until j becomes equal to log 2(n)-1.

If j, which represents the present number of temporal divisions, is equal to log 2(n)-1 when step 103 is ended, i.e., in step 104, then the temporal-spatial subband division of all signals is finished. According to the coding process, in step 109, obtained signals $A^{(j)*}[0]$, $E^*[i]$ ($0 < i < n$) are quantized and losslessly coded. Linear quantization, nonlinear quantization, and vector quantization are used as the quantization process, and in addition to these processes, bit-plane quantization used in JPEG 2000 which is an international standard for still image coding may be also used. Zero-tree coding disclosed in J. M. Shapiro, "Embedded image coding using zerotrees of wavelets coefficients", IEEE Trans. Signal Processing, vol. 41. pp. 3445-3462, Dec. 1993, arithmetic coding, or run-length coding may be used as the lossless coding. In step 110, V[i] ($0 \le i < n$) are coded. The coding process for $A^{(0)}[k]$ ($0 \le k < n$) is now put to an end.

According to the moving picture coding process described above, a three-dimensional subband dividing process for temporally dividing an input picture signal into subbands and spatially dividing the input picture signal into subbands is performed a plurality of times. The subband dividing process comprises:

the motion information calculating step of calculating motion information representative of a motion between frames of an input picture signal and between bands of an intraband signal which is a band signal of one of low-frequency subbands produced by dividing the input picture signal into subbands;

the temporal subband dividing step of temporally dividing the input picture signal and the intraband signal into subbands after the input picture signal and the intraband signal are motion-compensated according to the motion information obtained in the motion information calculating step, thereby generating a temporal low-frequency subband signal and a temporal high-frequency subband signal;

the temporal high-frequency subband signal spatially dividing step of spatially dividing the temporal high-frequency subband signal into subbands, thereby generating a temporal high-frequency, spatial low-frequency subband and a temporal high-frequency, spatial high-frequency subbarid;

the temporal low-frequency subband signal spatially dividing step of spatially dividing temporal low-frequency subband signal into subbands, thereby generating a temporal low-frequency, spatial low-frequency subband and a temporal low-frequency, spatial high-frequency subband; and
the band signal spatially dividing step of spatially dividing the intraband signal into subbands, thereby generating a low-frequency intrasubband and a high-frequency intrasubband.

The temporal subband dividing step, the temporal high-frequency subband signal spatially dividing step, the temporal low-frequency subband signal spatially dividing step, and the band signal spatially dividing step are performed on the input picture signal. The low-frequency intrasubband obtained after the band signal spatially dividing step is used as the intraband signal, and the temporal subband dividing step, the temporal high-frequency subband signal spatially dividing step, the temporal low-frequency subband signal spatially dividing step, and the band signal spatially dividing step are recursively repeated. Each time these steps are repeated, the temporal low-frequency, spatial low-frequency subband and the temporal high-frequency, spatial low-frequency subband are replaced respectively with the temporal low-frequency subband signal and the temporal high-frequency subband signal that are obtained in the temporal subband dividing step performed immediately thereafter.

According to the present embodiment, the process sequence is a sequence in which a frame in a certain layer is temporally and spatially divided into subbands, and thereafter the frame to be coded in a next layer is once subjected to spatial subband combination. However, these two processes can be integrated with each other. The feature of the present invention resides in that a motion compensation is appropriately corrected depending on a spatial frequency band, and the order of spatial subband dividing processes has nothing to do with the objects of the present invention.

Moving picture decoding according to the present invention will now be described below. According to the present embodiment, a decoded picture has a resolution that is represented by 1/(the power of 2) of the resolution of an original picture in both temporal and spatial directions. Specifically, if the number of spatial subband divisions in the coding process is represented by m, then it is possible to reconstruct decoded pictures having horizontal and vertical resolutions represented by 1/2, 1/4, ..., $1/2^m$ of the resolution of the original picture. If the number of temporal subband divisions is n0 = log 2(n), then it is possible to reconstruct decoded pictures having frame rates represented by 1/2, 1/4, ..., $1/2^{n0}$ of the frame rate of the original picture.

Fig. 5 shows an arrangement of a moving picture decoding apparatus according to an embodiment of the present invention. The moving picture decoding apparatus serves to decode moving picture data that have been divided into subbands and coded. Fig. 5 also shows the concept of a subband combination which corresponds to the subband division shown in Fig. 2. Specifically, the moving picture decoding apparatus shown in Fig. 5 is connected to the moving picture coding apparatus shown in Fig. 2 through a signal transmission medium, and receives and decodes moving picture data coded by the moving picture coding apparatus.

The moving picture decoding apparatus comprises first to third combiners 2001 to 2003 for performing temporal subband combination, fourth and fifth combiners 2004, 2005 for performing spatial subband combination, and first and second dividers 2006, 2007 for forming temporal subband division. Third combiner 2003 is supplied with low-frequency temporal subband signal 31 and outputs decoded picture 36. Second divider 2007 is supplied with decoded picture 36 and generates signal 24. Fifth combiner 2005 is supplied with signal 24 and high-frequency subband signal 23, and signal 25 which is output from fifth combiner 2005 is supplied to second combiner 2002. Second combiner 2002 outputs decoded picture 26 which is supplied to first divider 2006. First divider 2006 outputs low-frequency subband estimated signal 14. Fourth combiner 2004 is supplied with low-frequency subband estimated signal 14 and high-frequency subband signal 13 and outputs signal 15. First combiner 2001 is supplied with signal 15 and outputs decoded picture 16.

With the moving picture decoding apparatus, in order to obtain decoded picture 36 having the smallest reduced resolution, third combiner 2003 may perform temporal subband combination on low-frequency temporal subband signal 31 which is in the lowest band of coded subband signals. In order to obtain decoded picture 26 in a layer lower than decoded picture 36, i.e., decoded picture 26 having a resolution that is one level higher than decoded picture 36, a low-frequency subband corresponding to high-frequency subband signal 23 belonging to that layer is required. Therefore, signal 24 that is produced when decoded picture 36 is temporally divided into subbands by second divider 2007 is used as a low-frequency subband estimated signal. After fifth combiner 2005 performs spatial subband combination of low-frequency subband estimated signal 24 and high-frequency subband signal 23, second combiner 2002 performs temporal subband combination to produce decoded picture 26. The temporal subband division in second divider 2007 is uniquely determined by the temporal subband combination in second combiner 2002. Similarly, in order to obtain decoded picture 16 having a resolution that is one level higher than decoded picture 26, low-frequency subband estimated signal 14 which is produced from decoded picture and temporal subband division 2006 and high-frequency subband signal 13 may be spatially combined by fourth combiner 2004, after which first combiner 2001 may perform temporal subband combination. Decoded pictures having different resolutions can be obtained by repeatedly performing the above decoding process on subband signals having a hierarchical structure.

The decoding process will be described below with reference to Fig. 6 which shows a flowchart representing details of the decoding process. A processing sequence for reconstructing decoded picture $A^{(j0)}{}_{(k0)}[i]$ having a horizontal and vertical resolution of $1/2^{k0}$ ($0 \leq k0 \leq m$) and a frame rate of $1/2^{j0}$ ($0 \leq j0 \leq n0$) from original picture $A^{(0)}[i]$ ($0 \leq i < n$, n is the power of 2) will be described below.

First, in step 151, j is set to log 2(n)-1. Thereafter, in step 152, the coded data is subjected to inverse-transform of the lossless coding and inverse-quantization. The resultant signal obtained from this process is defined as $A^{(n0)*}[0]$, $E^*[i]$ ($0<i<n$) according to the symbols used in Fig. 3. Then, in step 153, it is determined whether j0 is equal to n0 or not. If j0 is equal to n0, then it is not necessary to perform temporal subband combination, and $A^{(j)*}[0]$ is subjected to spatial subband combination in k0 layers. Thereafter, when decoded picture $A^{(j0)}_{(k0)}[0]$ has been reconstructed, the decoding process is put to an end. If j0 is not equal to n0 in step 153, then $A^{(j)*}[0]$, $E^*[n/2]$ are subjected to temporal and spatial combination in steps 155, 156.

Fig. 7 shows the processing sequence for temporally and spatially combining the subbands of two frame data in step 156. It is assumed that the number of subband combinations upon the decoding is represented by k0. If k0 is zero, then the decoded picture is of the same resolution as the original picture. If k0 is positive, then the decoded picture is of a resolution which has been reduced by the k0-th power of 2. The data of two frames to be processed for subband combination have a hierarchical structure that is spatially divided into subbands m times.

According to step 121 shown in Fig. 4, a subband signal belonging to the lowest frequency band according to the spatial subband division, of subband signals belonging to the low-frequency band according to the temporal subband division, corresponds to $Am^*$, and a high-frequency subband after the subband division in the k-th layer corresponds to $H(Ak^*)$ ($0\leq k<m$). Similarly, signals according to the spatial subband division, of subband signals belonging to the high-frequency band according to the temporal subband division can be associated with Em and $H(Ek^*)$ ($0\leq k<m$), respectively. Motion information representing a motion compensation for two frames can be associated with Vk ($0\leq k<m$) that is output in steps 111, 116 shown in Fig. 4. Motion information may be independently coded or may be hierarchically coded. Therefore, a processing sequence for reconstructing decoded pictures Bk0, Ck0 having a resolution that is reduced by the k0-th power of 2 from the original pictures B0, C0 by referring to $Am^*$, H(Bk), $Em^*$, $(Ek^*)$ ($0\leq k<m$) will be described below with reference to Fig. 7.

First, in step 171, k is set to k = m. In step 172, then $Am^*$, $Em^*$ are subjected to temporal subband combination, thereby producing Bm, Cm.

$$Bm[p,q] = Am^*[p,q] - WCm(Em^*)[p,q] \qquad (3)$$

$$Cm[p,q] = 2 \times Em^*[p,q] + WBm(Bm)[p,q] \qquad (4)$$

where WBm, WCm are a filter representing a motion compensation from Bm to Cm and a filter representing a motion compensation from Cm to Bm, and are determined by the motion information Vm used in the coding process and an interpolating process.

In step 173, if k0 is equal to m, the decoding process is terminated. If k0 is not equal to m, then it is necessary to obtain $LL(Am-1^*)$, $LL(Em-1^*)$ in order to perform one subband combination. Therefore, in step 174, using motion information Vm-1 which is used in a motion compensation for Bm-1, Cm-1 in the (m-1)-th layer, estimated values $LL^{est}(Am-1^*)$, $LL^{est}(Em-1^*)$ for $LL(Am-1^*)$, $LL(Em-1^*)$ are calculated.

$$LL^{est}(Em-1^*) = 1/2(Cm[p,q] - W_{Bm-1}{}^{L}(Bm)[p,q] \qquad (5)$$

$$LL^{est}(Am-1^*) = Bm[p,q] - W_{Cm-1}{}^{L}\,(LL^{est}(Em-1^*))[p,q] \qquad (6)$$

where $W_{Bm-1}{}^{L}$, $W_{Cm-1}{}^{L}$ are motion compensation filters obtained by reducing the motion information Vm-1 both horizontally and vertically to 1/2 and reducing the size of blocks, which are a unit of motion compensation, to 1/2. Alternatively, those which are the same as with the hierarchical motion compensation disclosed in T. Kimoto, "Multi-Resolution MCTF for 3D Wavelet Transformation in Highly Scalable Video," ISO/IEC JTC1/SC29/WG11, M9770, Trondheim, July 2003 are employed. Specifically, prediction signal $W_{Bm-1}(Bm-1)$ obtained by a motion compensation on Cm-1 in the (m-1)-th layer is represented as the sum of a signal due to only spatial low-frequency subband Bm and a signal due to only high-frequency subband H(Bm-1). The former is used as $W_{Bm-1}{}^{L}(Bm)$ for estimating $LL(Em-1^*)$.

Thereafter, in step 175, $LL^{est}(Am-1^*)$, $H(Am-1^*)$ are subjected to subband combination, and $LL^{est}(Em-1^*)$, H(Em-1*) are subjected subband combination, thereby producing Am-1*, Em-1*. As indicated in steps 173, 176, the processing from steps 172 to 175 is repeated to obtain subbands Bk0, Ck0 corresponding to layer k0. Then, the temporal-spatial subband combination in step 156 shown in Fig. 6 is terminated.

In the present embodiment, the correction of subbands (step 174) and the spatial subband combination (step 175) are described as independent steps. However, these steps may be integrated by using a filter that is produced by combining the motion compensation filter for subband correction and the subband combining filter. In the present embodiment, temporal subband combination is preformed on Ek*, Ak* according to the motion information Vk to obtain Bk, Ck, after which $LL^{est}$(Ek-1*), $LL^{est}$(Ak-1*) are calculated by referring to the motion information Vk-1. However, if Bk, Ck do not need to be output, then these processes may be integrated with each other.

According to a process which is the same as the process disclosed in T. Kimoto, "Multi-Resolution MCTF for 3D Wavelet Transformation in Highly Scalable Video," ISO/IEC JTC1/SC29/WG11, M9770, Trondheim, July 2003, it is possible to add a process for correcting $LL^{est}$(Ek-1*) so as to become closer to LL(Ek-1*) by referring to H(Ek-1*), Ck, and correcting $LL^{est}$(Ak-1*) so as to become closer to LL(Ak-1*) by referring to H(Ak-1*), Ak.

The decoding process will further be described below with reference to Fig. 6. After performing subband combination on $A^{(j)*}$[0], E*[n/2], pictures $A^{(j)}_{(k0)}$[0], $A^{(j)}_{(k0)}$[n/2] whose resolution is $1/2^{k0}$ of the resolution of the original picture are obtained. If j0 is equal to n0-1 in step 157, then the decoding process is put to an end here. If j0 is not equal to n0-1 in step 157, then for temporal-spatial subband combination in the next repetitive loop, pictures $A^{(j)}_{(k0)}$[0], $A^{(j)}_{(k0)}$[n/2] are spatially divided into subbands, generating $A^{(j-1)*}_{(k0)}$[0], $A^{(j-1)*}_{(k0)}$[n/2]. In step 162, j is decremented by 1. Thereafter, temporal-spatial subband combination in the next layer is performed on $A^{(j)*}$[0], E*[n/4] and $A^{(j)*}$[n/2], E*[3n/4] as indicated in steps 156, 159, 160. The subband combination is repeated in the manner described above, and the decoding process is put to an end when j becomes equal to 0 in step 161.

The above decoding process has the step of generating a decoded picture signal according to a three-dimensional subband combining process for performing spatial subband combination on subband signals for each frame and thereafter performing temporal subband combination on a temporal low-frequency subband and a temporal high-frequency subband. The three-dimensional-subband combining process comprises:

the temporal high-frequency subband combining step of generating a combined temporal high-frequency subband signal by referring to a temporal high-frequency, spatial low-frequency signal which is a signal of a spatial low-frequency band of a temporal high-frequency subband, and a temporal high-frequency, spatial high-frequency subband which is a subband of a high-frequency band adjacent to the low-frequency signal, and additionally both or either one of a temporal low-frequency, spatial low-frequency subband which is in the same frequency band as the temporal high-frequency, spatial low-frequency signal, and a temporal low-frequency, spatial high-frequency subband which is a subband of a high-frequency band adjacent to the subband signal, and motion information representing a motion compensating process corresponding to the temporal high-frequency subband;
the temporal low-frequency subband spatially combining step of combining the temporal low-frequency, spatial low-frequency subband and the temporal low-frequency, spatial high-frequency subband; and
the temporally combining step of performing temporal subband combination of the temporal low-frequency subband and the temporal high-frequency subband after the temporal low-frequency subband and the temporal high-frequency subband are processed for a motion compensation prediction.

The temporal high-frequency subband combining step is performed on the temporal high-frequency, spatial low-frequency signal which is in the lowest frequency band of the temporal high-frequency subband, and the temporal low-frequency subband spatially combining step is performed on the temporal low-frequency, spatial low-frequency subband which is in the lowest frequency band of the temporal low-frequency subband. The band signal obtained by the temporal high-frequency subband combining step is regarded as a new temporal high-frequency, spatial low-frequency signal, and the band signal obtained by the temporal low-frequency subband spatially combining step is regarded as a new temporal low-frequency, spatial low-frequency subband. The temporal high-frequency subband spatially combining step and the temporal low-frequency subband spatially combining step are recursively repeated. As a result, the temporal low-frequency subband and the temporal high-frequency subband are obtained.

In the present embodiment, described is the case in which the frame reference relationship in the temporal subband division is of a hierarchical structure. However, the present invention is also applicable where the frame reference relationship is of any desired structure.

The present embodiment has been described with respect to a limited arrangement in which a past frame is converted into low-frequency subbands in one temporal subband division. However, the present invention is also applicable where a future frame is converted into low-frequency subbands or two frames are temporally divided as they are predicted bidirectionally. At any rate, low-frequency subbands produced when each of temporally divided subbands is spatially divided are replaced with subbands produced when low-frequency subbands produced from a spatially divided picture to be coded are temporally divided, and correction is made so that the desired decoded results can be obtained using decoded results of frames which are paired when they are decoded or using the subbands.

In the present embodiment, the subband division is employed as a conversion process for realizing hierarchical coding. However, the present invention is applicable to any hierarchical coding processes. In the subband division, a signal corresponding to a low-frequency band is associated with a higher layer. According to the coding process based on the present invention, after an input picture signal is divided into layers, a higher-layer signal produced when a prediction error signal obtained subsequently to an interframe prediction process is divided into layers may be replaced with a prediction error obtained when the higher-layer signal is processed by the interframe prediction process. In the decoding process, a higher-layer of hierarchical frame signals is corrected into a higher-layer signal produced when a prediction error signal obtained from the interframe prediction process performed on the input picture signal is divided into layers.

If the prediction error signal is employed, a three-dimensional subband dividing process in a moving picture coding process comprises:

the motion information calculating step of calculating motion information representative of a motion between frames of an input picture signal and between bands of an intraband signal which is a band signal of one of low-frequency subbands produced by dividing the input picture signal into subbands;
the motion compensation predicting step of obtaining a prediction error signal by performing a motion compensation predicting process on the input picture signal and the intraband signal according to the motion information obtained in the motion information calculating step;
the prediction error signal spatially dividing step of spatially dividing the prediction error signal into subbands, thereby generating a low-frequency prediction error subband and a high-frequency prediction error subband; and
the band signal spatially dividing step of spatially dividing the intraband signal into subbands, thereby generating a low-frequency intrasubband and a high-frequency intrasubband.

The motion information calculating step, the motion compensation predicting step, the prediction error signal spatially dividing step, and the band signal spatially dividing step are performed on the input picture signal. The low-frequency intrasubband obtained after the band signal spatially dividing step is used as the intraband signal, and the motion information calculating step, the motion compensation predicting step, the prediction error signal spatially dividing step, and the band signal spatially dividing step are recursively repeated. Each time these steps are repeated, the low-frequency prediction error subband obtained by the prediction error signal spatially dividing step is replaced with the prediction error signal obtained by the motion compensation predicting step performed immediately thereafter.

Similarly, if the prediction error signal is employed, a three-dimensional subband combining process in a moving picture decoding process comprises:

the prediction error signal combining step of generating a combined subband prediction error signal by referring to a prediction error low-frequency signal which is a signal of a low-frequency band of the prediction error signal, and a high-frequency prediction error signal which is a subband of high-frequency band adjacent to the low-frequency signal, arid additionally both or either one of a low-frequency intrasubband which is in the same frequency band as the prediction error low-frequency signal, and a high-frequency intrasubband which is a subband of a high-frequency band adjacent to the low-frequency intrasubband, and the motion information representing the motion compensation process corresponding to the prediction error signal;
the intraband signal spatially combining step of combining the low-frequency intrasubband and the high-frequency intrasubband; and
the motion compensation decoding step of performing a motion compensation predicting process on an intraband signal to add the combined prediction error signal thereto, thereby producing a decoded picture signal.

The prediction error signal combining step is performed on the prediction error low-frequency signal which is in the lowest frequency band of the prediction error signal, and the intraband signal spatially combining step is performed on the low-frequency intrasubband which is in the lowest frequency band of the intraband signal. The band signal obtained by the prediction error signal combining step is regarded as a new prediction error low-frequency signal, and the band signal obtained by the intraband signal spatially combining step is regarded as a new low-frequency intrasubband. The prediction error signal combining step and the intraband signal spatially combining step are recursively repeated. As a result, the intraband signal and the prediction error signal are obtained.

The moving picture coding apparatus and the moving picture decoding apparatus described above can be implemented using a computer. Specifically, the processing sequences and controlling processes of the moving picture coding apparatus and the moving picture decoding apparatus are realized when a program is executed by the computer. The computer mentioned here includes a processor and a controller. The program is read into the computer through a network or a recording medium such as a CD-ROM which stores the program. The present invention covers such a program or a program product or a recording medium. A medium for transmitting such a program is also included in the scope of the present invention.

Fig. 8 shows an arrangement of a computer which implements the moving picture coding apparatus and/or the moving picture decoding apparatus. As shown in Fig. 8, the computer has processor 51, memory 52, and I/O. interface 53 which are connected to each other by bus 54.

Memory 52 stores either one or both of a moving picture coding program and a moving picture decoding program which are to be executed by processor 51, and also serves as a temporary storage area while the processor is executing the moving picture coding program or the moving picture decoding program. In this description, the term "memory" is used to represent any of various memory devices such as a main memory unit such as a RAM, a cache memory included in a CPU or a register included in a processor, or a hard disk device. In the present embodiment, I/O interface 53 is a medium means for transmitting original pictures serving as an input to and coded data serving as an output from the moving picture coding program under the control of processor 51, and also coded data serving as an input to and decoded pictures serving as an output from the moving picture decoding program under the control of processor 51. However, the presence of I/O interface 13 does not prevent the moving picture coding method or the moving picture decoding method according to the present embodiment from being performed by storing original pictures and coded data, which are sought by another program, temporarily into memory 52 and reading them from memory 52.

Industrial applicability:

The present invention is applicable to uses wherein coded moving picture data are partially deleted from playback devices having various transmission environments and playback environments to allow moving picture distribution optimum for the environments of the playback devices.

## Claims

**1.** A method of coding a moving picture for performing hierarchical coding, comprising the steps of:

performing a first process on an input picture signal and thereafter spatially dividing the input picture signal into layers to obtain a first signal;
reducing said input picture signal with a resolution converting filter and thereafter performing a second process on the input picture signal at a reduced resolution to obtain a second signal; and
coding said first signal and said second signal.

**2.** A method of coding a moving picture for performing hierarchical coding, comprising the steps of:

performing a temporal-spatial hierarchical dividing process to divide an input picture signal into a first signal which is obtained by performing a first process on the input picture signal and thereafter spatially dividing the input picture signal into layers and a second signal which is obtained by performing a second process at a reduced resolution on a reduced input picture signal which is produced when said input picture signal is reduced by a resolution converting filter; and
recursively performing said temporal-spatial hierarchical dividing process on said reduced input picture signal and thereafter coding signals in the respective layers.

**3.** The method of coding a moving picture according to claim 1 or 2,
wherein said first process comprises a first temporal filtering, said second process comprises a second temporal filtering, said first signal comprises a temporally filtered lower-layer signal, and said second signal comprises a higher-layer temporally filtered signal.

**4.** The method of coding a moving picture according to claim 1 or 2, wherein said first process comprises a first motion compensating process, said second process comprises a second motion compensating process, said first signal comprises a prediction error lower-layer signal, and said second signal comprises a higher-layer prediction error signal.

**5.** The method of coding a moving picture according to claim 1 or 2, wherein said resolution covering filter is the same as a filter for generating a higher-layer signal in a hierarchical dividing process.

**6.** A method of coding a moving picture, comprising the step of performing, a plurality of times, a three-dimensional subband dividing process for temporally dividing an input picture signal into subbands and spatially dividing the input picture signal into subbands,
said three-dimensional subband dividing process comprising:

a motion information calculating step of calculating motion information representative of a motion between frames of the input picture signal and between bands of an intraband signal which is a band signal of one of low-frequency subbands produced by dividing the input picture signal into subbands;
a temporal subband dividing step of temporally dividing the input picture signal and the intraband signal into subbands after the input picture signal and the intraband signal are motion-compensated according to the motion information obtained in the motion information calculating step, thereby generating a temporal low-frequency subband signal and a temporal high-frequency subband signal;
a temporal high-frequency subband signal spatially dividing step of spatially dividing temporal high-frequency subband signal into subbands, thereby generating a temporal high-frequency, spatial low-frequency subband and a temporal high-frequency, spatial high-frequency subband;
a temporal low-frequency subband signal spatially dividing step of spatially dividing temporal low-frequency subband signal into subbands, thereby generating a temporal low-frequency, spatial low-frequency subband and a temporal low-frequency, spatial high-frequency subband; and
a band signal spatially dividing step of spatially dividing the intraband signal into subbands, thereby generating a low-frequency intrasubband and a high-frequency intrasubband;
wherein the temporal subband dividing step, the temporal high-frequency subband signal spatially dividing step; the temporal low-frequency subband signal spatially dividing step, and the band signal spatially dividing step are performed on the input picture signal;
the low-frequency intrasubband obtained after the band signal spatially dividing step is used as the intraband signal, and the temporal subband dividing step, the temporal high-frequency subband signal spatially dividing step, the temporal low-frequency subband signal spatially dividing step, and the band signal spatially dividing step are recursively repeated, and each time these steps are repeated, the temporal low-frequency, spatial low-frequency subband and the temporal high-frequency, spatial low-frequency subband are replaced respectively with the temporal low-frequency subband signal and the temporal high-frequency subband signal that are obtained in the temporal subband dividing step performed immediately thereafter.

**7.** The method of coding a moving picture according to claim 6, wherein when two intraband signals in the same frequency bands are divided into subbands in said temporal subband dividing step, one of the temporal high-frequency subband signal and the temporal low-frequency subband signal which are obtained is associated with a past band signal, and other of the temporal high-frequency subband signal and the temporal low-frequency subband signal which are obtained is associated with a future band signal.

**8.** A method of coding a moving picture, comprising the step of performing, a plurality of times, a three-dimensional subband dividing process for temporally dividing an input picture signal into subbands and spatially dividing the input picture signal into subbands,
said three-dimensional subband dividing process comprising:

a motion information calculating step of calculating motion information representative of a motion between frames of the input picture signal and between bands of an intraband signal which is a band signal of one of low-frequency subbands produced by dividing the input picture signal into subbands;
a motion compensation predicting step of obtaining a prediction error signal by performing a motion compensation predicting process on the input picture signal and the intraband signal according to the motion information obtained in the motion information calculating step;
a prediction error signal spatially dividing step of spatially dividing the prediction error signal into subbands, thereby generating a low-frequency prediction error subband and a high-frequency prediction error subband; and
a band signal spatially dividing step of spatially dividing the intraband signal into subbands, thereby generating a low-frequency intrasubband and a high-frequency intrasubband;
wherein the motion information calculating step, the motion compensation predicting step, the prediction error signal spatially dividing step, and the band signal spatially dividing step are performed on the input picture signal;
the low-frequency intrasubband obtained after the band signal spatially dividing step is used as the intraband signal, and the motion information calculating step, the motion compensation predicting step, the prediction error signal spatially dividing step, and the band signal spatially dividing step are recursively repeated, and each time these steps are repeated, the low-frequency prediction error subband obtained by the prediction error signal. spatially dividing step is replaced with the prediction error signal obtained by the motion compensation predicting coding step performed immediately thereafter.

**9.** The method of coding a moving picture according to claim 8, wherein either one of past and future subband signals with respect to two intraband signals which are in the same frequency band is used as a reference signal in said motion compensation predicting step.

**10.** The method of coding a moving picture according to claim 8, wherein band signals, except a single band signal to be coded, of a plurality of intraband signals which are in the same frequency band is used as reference signals in said motion compensation predicting step, and a weighted average of the reference signals is used in a motion compensating process.

**11.** The method of coding a moving picture according to claim 8, wherein when intraband signals which are in the same frequency band are motion-compensated, band signals used as reference signals are changed for one pixel or a plurality of pixels in said motion compensation predicting step.

**12.** A method of decoding a moving picture to decode hierarchical coded data, comprising the steps of:

decoding a first signal produced by a first process, a third signal produced when a second signal produced from a second process is spatially divided into layers, and processing information representing said second process;
generating a fourth signal from said first signal and said processing information; and
combining said third signal and said fourth signal with each other and thereafter performing inverse transform of said second process to obtain a decoded picture.

**13.** The method of decoding a moving picture according to claim 12, wherein said first process comprises a first temporal filtering, said second process comprises a second temporal filtering, said first signal comprises a higher-layer temporally filtered signal, said second signal comprises a temporally filtered signal, said third signal comprises a temporally filtered lower-layer signal, said fourth signal comprises a temporally filtered higher-layer signal, and said processing information comprises temporally filtering information.

**14.** The method of decoding a moving picture according to claim 12, wherein said first process comprises a first motion compensating process, said second process comprises a second motion compensating process, said first signal comprises a higher-layer prediction error signal, said second signal comprises a prediction error signal, said third signal comprises a prediction error lower-layer signal, said fourth signal comprises a prediction error higher-layer signal, and said processing information comprises motion information.

**15.** A method of decoding a moving picture to obtain a decoded picture by combining layers of hierarchical coded data for each frame and thereafter temporally inverse-filtering the data, comprising the steps of:

decoding a higher-layer temporally filtered signal which is produced by first temporal filtering, a temporally filtered lower-layer signal produced when a temporally filtered signal which is produced by second temporal filtering is spatially divided into layers, and temporal filtering information representing said second temporal filtering;
generating a temporally filtered higher-layer signal from said higher-layer temporally filtered signal and said temporal filtering information;
performing a temporally filtered signal combining process to combine said temporally filtered higher-layer signal and said temporally filtered lower-layer signal to generate a combined temporally filtered signal; and
producing a decoded picture by regarding said combined temporally filtered signal as the higher-layer temporally filtered signal, decoding the temporal filtering information and the temporally filtered lower-layer signal in a layer lower than a layer of interest, recursively performing the temporally filtered signal combining process, and thereafter performing temporally inverse-filtering.

**16.** A method of decoding a moving picture to obtain a decoded picture by combining layers of hierarchical coded data for each frame and thereafter performing motion compensation combining process, comprising the steps of:

decoding a higher-layer prediction error signal which is a signal produced by a first motion compensation prediction, a prediction error lower-layer signal produced when a prediction error signal which is produced by a second motion compensation prediction is spatially divided into layers in one level, and motion information representing said second motion compensation prediction;

generating a prediction error higher-layer signal from said higher-layer prediction error signal and said motion information;
performing a prediction error signal combining process to combine said prediction error higher-layer signal and said prediction error lower-layer signal to generate a combined prediction error signal; and
producing a decoded picture by regarding said combined prediction error signal as the higher-layer prediction error signal, decoding the motion information and the prediction error lower-layer signal in a layer lower than a layer of interest, recursively performing the prediction error signal combining process, and thereafter performing a motion compensation combining process.

**17.** A method of decoding a moving picture, comprising the step of generating a decoded picture signal according to a three-dimensional subband combining process for spatially combining subband signals for each frame and thereafter performing temporal subband combining process for temporally combining a temporal low-frequency subband and a temporal high-frequency subband,
said three-dimensional subband combining process comprising:

a temporal high-frequency subband combining step of generating a combined temporal high-frequency subband signal by referring to a temporal high-frequency, spatial low-frequency signal which is a spatial low-frequency signal of a temporal high-frequency subband, and a temporal high-frequency, spatial high-frequency subband which is a subband of a high-frequency band adjacent to the low-frequency signal, and additionally both or either one of a temporal low-frequency, spatial low-frequency subband which is in the same frequency band as the temporal high-frequency, spatial low-frequency signal, and a temporal low-frequency, spatial high-frequency subband which is a subband of a high-frequency band adjacent to the subband signal, and motion information representing a motion compensating process corresponding to said temporal high-frequency subband;
a temporal low-frequency subband spatially combining step of combining the temporal low-frequency, spatial low-frequency subband and the temporal low-frequency, spatial high-frequency subband; and
a temporally combining step of performing a motion compensation predicting process on the temporal low-frequency subband and the temporal high-frequency subband, and thereafter performing temporal subband combination;
wherein the temporal high-frequency subband combining step is performed on the temporal high-frequency, spatial low-frequency signal which is in the lowest frequency band of the temporal high-frequency subband, and the temporal low-frequency subband spatially combining step is performed on the temporal low-frequency, spatial low-frequency subband which is in the lowest frequency band of the temporal low-frequency subband;and the band signal obtained by the temporal high-frequency subband combining step is regarded as a new temporal high-frequency, spatial low-frequency signal, and the band signal obtained by the temporal low-frequency subband spatially combining step is regarded as a new temporal low-frequency, spatial low-frequency subband, the temporal high-frequency subband spatially combining step and the temporal low-frequency subband spatially combining step are recursively repeated, producing the temporal low-frequency subband and the temporal high-frequency subband.

**18.** The method of decoding a moving picture according to claim 17, wherein said temporal high-frequency subband combining step comprises:

a temporal high-frequency subband estimating step of estimating a temporal high-frequency, spatial low-frequency subband using the temporal low-frequency, spatial low-frequency subband which is in the same frequency band as said temporal high-frequency, spatial low-frequency signal and the motion information; and
a temporal high-frequency subband spatially combining step of performing subband combination of the estimated temporal high-frequency, spatial low-frequency subband obtained by said temporal high-frequency subband estimating step and the temporal high-frequency, spatial high-frequency subband which is a subband of a high-frequency band adjacent to said subband signal.

**19.** The method of decoding a moving picture according to claim 18, wherein in said temporal high-frequency subband estimating step, the temporal subband division between a low-frequency subband of a signal, due to only a low-frequency intrasubband, of prediction signals generated in the motion compensation, using the motion information representing the motion compensation corresponding to the temporal high-frequency subband, and a low-frequency subband of a present frame signal in the motion compensation is used as an estimated value of the temporal high-frequency, spatial low-frequency subband.

**20.** The method of decoding a moving picture according to claim 18, wherein said temporal high-frequency subband estimating step comprises the steps of:

reducing a temporal high-frequency component in proportion to an interband resolution ratio between the prediction error signal and a prediction error low-frequency signal, using the motion information representing the motion compensation corresponding to the temporal high-frequency subband; and
after the motion compensating process is performed on the reduced temporal high-frequency component, temporally dividing the temporal high-frequency component into subbands, and using an obtained value as the estimated value of the temporal high-frequency, spatial low-frequency subband.

**21.** The method of decoding a moving picture according to claim 17, wherein said temporal high-frequency subband combining step comprises:

a temporal high-frequency subband estimating step of estimating a temporal high-frequency, spatial low-frequency subband using said temporal low-frequency, spatial low-frequency subband, said temporal low-frequency, spatial high-frequency subband, and said motion information; and
a temporal high-frequency subband spatially combining step of performing subband combination of the estimated temporal high-frequency, spatial low-frequency subband obtained by said temporal high-frequency subband estimating step and the temporal high-frequency, spatial high-frequency subband which is a subband of a high-frequency band adjacent to said subband signal.

**22.** The method of decoding a moving picture according to any one of claims 17 to 21, wherein in said temporal subband combining step, either one of past and future band signals with respect to two band signals which are in the same frequency band is associated with said temporal high-frequency subband signal, the other of the past and future band signals is associated with said temporal low-frequency subband signal, and the temporal subband combination is performed.

**23.** The method of decoding a moving picture according to any one of claims 17 to 21, wherein said temporal subband combining step includes a process of producing a weighted average of band signals other than said band signal in said motion compensating process.

**24.** The method of decoding a moving picture according to any one of claims 17 to 21, wherein in said temporal subband combining step, paired band signals to be temporary combined to subbands are changed for each band signal or each plurality of pixels.

**25.** A method of decoding a moving picture to generate a decoded picture signal, comprising the step of performing a three-dimensional subband combining process for perform subband combination of spatially combinirig subband signals for each frame and thereafter performing a motion compensating process on a combined intraband signal and a prediction error signal, said three-dimensional subband combining process comprising:

a prediction error signal combining step of generating a combined subband prediction error signal by referring to a prediction error low-frequency signal which is a low-frequency signal of the prediction error signal, and a high-frequency prediction error subband which is in a subband of a high-frequency band adjacent to the low-frequency signal, and additionally both or either one of a low-frequency intrasubband which is in the same frequency band as the prediction error low-frequency signal, and a high-frequency intrasubband which is a subband of a high-frequency band adjacent to the low-frequency intrasubband, and motion information representing a motion compensating process corresponding to said prediction error signal;
an intraband signal spatially combining step of combining the low-frequency intrasubband and the high-frequency intrasubband; and
a motion compensation decoding step of performing a motion compensation predicting process on an intraband signal to add the combined prediction error signal thereto, thereby producing a decoded picture signal;
wherein the prediction error signal combining step is performed on the prediction error low-frequency signal which is in the lowest frequency band of the prediction error signal;
the intraband signal spatially combining step is performed on the low-frequency intrasubband which is in the lowest frequency band of the intraband signal; and
the band signal obtained by the prediction error signal combining step is regarded as a new prediction error low-frequency signal, the band signal obtained by the intraband signal spatially combining step is regarded as a new low-frequency intrasubband, said prediction error signal combining step and said intraband signal spatially combining step are recursively repeated, producing the intraband signal and the prediction error-signal.

**26.** The method of decoding a moving picture according to claim 25, wherein said prediction error signal combining step comprises:

a prediction error subband estimating step of estimating a low-frequency prediction error subband which is a subband of a low-frequency band of said prediction error signal, using the prediction error low-frequency signal, the low-frequency intrasubband, and the motion information; and
a prediction error signal spatially combining step of performing subband combination of the estimated prediction error low-frequency subband obtained by said prediction error subband estimating step and the high-frequency prediction error subband which is a subband of a high-frequency band adjacent to said subband signal.

**27.** The method of decoding a moving picture according to claim 26, wherein said prediction error subband estimating step comprises the step of:

using the difference between a low-frequency subband of a signal, due to only a low-frequency intrasubband, of prediction signals generated in the motion compensation, using the motion information representing the motion compensation corresponding to the prediction error signal, and a low-frequency subband of a present frame signal in the motion compensation, as an estimated value of the low-frequency prediction error subband.

**28.** The method of decoding a moving picture according to claim 26, wherein in said prediction error subband estimating step, a result of the motion compensating process performed while being reduced in proportion to an interband resolution ratio between said prediction error signal and said prediction error low-frequency signal, using the motion information representing the motion compensation corresponding to the prediction error signal, is used as an estimated value of the low-frequency prediction error subband.

**29.** The method of decoding a moving picture according to claim 25, wherein said prediction error signal combining step comprises:

a prediction error subband estimating step of estimating a low-frequency prediction error subband which is a subband of a low-frequency band of said prediction error signal, using the prediction error low-frequency signal, the low-frequency intrasubband, the high-frequency intrasubband, and the motion information; and
a prediction error signal spatially combining step of performing subband combination of the estimated prediction error low-frequency subband obtained by said prediction error subband estimating step and the high-frequency prediction error subband which is a subband of a high-frequency band adjacent to said subband signal.

**30.** The method of decoding a moving picture according to any one of claims 25 to 29, wherein either one of past and future band signals with respect to two band signals which are in the same frequency band is used as a reference signal in said motion compensation decoding step.

**31.** The method of decoding a moving picture according to any one of claims 25 to 29, wherein in said motion compensation decoding step, the motion compensating process for a plurality of band signals which are in the same frequency band uses a weighted average of a plurality of reference signals.

**32.** The method of decoding a moving picture according to any one of claims 25 to 29, wherein said motion compensation decoding step comprises the step of changing band signals used as reference signals for each pixel or each plurality of pixels when the motion compensating process is performed on band signals which are in the same frequency band.

**33.** An apparatus for coding a moving picture for performing hierarchical coding, comprising:

temporally filtered lower-layer signal coding means for coding a temporally filtered lower-layer signal obtained when a first temporally filtering is performed on an input picture signal and thereafter the input picture signal is spatially divided into layers; and
higher-layer temporally filtered signal coding means for coding a higher-layer temporally filtered signal obtained when said input picture signal is reduced with a resolution converting filter and thereafter a second temporally filtering is performed on the input picture signal at a reduced resolution.

**34.** An apparatus for coding a moving picture for performing hierarchical coding, comprising:

prediction error lower-layer signal coding means for coding a prediction error lower-layer signal obtained when a first motion compensating process is performed on an input picture signal and thereafter the input picture signal is spatially divided into layers; and
higher-layer prediction error signal coding means for coding a higher-layer prediction error signal obtained when said input picture signal is reduced with a resolution converting filter and thereafter a second motion compensating process is performed on the input picture signal at a reduced resolution.

**35.** An apparatus for coding a moving picture for performing hierarchical coding, comprising:

temporally filtered lower-layer signal generating means for generating a temporally filtered lower-layer signal by performing a first temporally filtering on an input picture signal and thereafter the input picture signal is spatially divided into layers; and
higher-layer temporally filtered signal generating means for generating a higher-layer temporally filtered signal by performing a second temporally filtering at a reduced resolution on a reduced input picture signal which is produced when said input picture signal is reduced by a resolution converting filter;
wherein said temporally filtered lower-layer signal and said higher-layer temporally filtered signal are recursively generated for said reduced input picture signal, and thereafter the respective layer signals are coded.

**36.** An apparatus for coding a moving picture for performing hierarchical coding, comprising:

prediction error lower-layer signal generating means for generating a prediction error lower-layer signal by performing a first motion compensation prediction on an input picture signal and thereafter spatially dividing the input picture signal into layers; and
higher-layer prediction error signal generating means for generating a higher-layer prediction error signal by performing a second motion compensation prediction at a reduced resolution on a reduced input picture signal which is produced when said input picture signal is reduced by a resolution converting filter;
wherein said prediction error lower-layer signal and said higher-layer prediction error signal are recursively generated for said reduced input picture signal, and thereafter the respective layer signals are coded.

**37.** An apparatus for coding a moving picture by performing, a plurality of times, a three-dimensional subband dividing process for temporally dividing an input picture signal into subbands and spatially dividing the input picture signal into subbands, comprising:

motion information calculating means for calculating motion information representative of a motion between frames of the input picture signal and between bands of an intraband signal which is a band signal of one of low-frequency subbands produced by dividing the input picture signal into subbands;
temporal subband dividing mean for temporally dividing the input picture signal and the iritraband signal into subbands after the input picture signal and the intraband signal are motion-compensated according to the motion information obtained by the motion information calculating means, thereby generating a temporal low-frequency subband signal and a temporal high-frequency subband signal;
temporal high-frequency subband signal spatially dividing means for spatially dividing temporal high-frequency subband signal into subbands, thereby generating a temporal high-frequency, spatial low-frequency subband and a temporal high-frequency, spatial high-frequency subband;
temporal low-frequency subband signal spatially dividing means for spatially dividing temporal low-frequency subband signal into subbands, thereby generating a temporal low-frequency, spatial low-frequency subband and a temporal low-frequency, spatial high-frequency subband; and
band signal spatially dividing means for spatially dividing the intraband signal into subbands, thereby generating a low-frequency intrasubband and a high-frequency intrasubband;
wherein said input picture signal is processed by said temporal subband dividing means, said temporal high-frequency subband signal spatially dividing means, said temporal low-frequency subband signal spatially dividing means, and said band signal spatially dividing means;
the low-frequency intrasubband obtained by said band signal spatially dividing means is used as the intraband signal, and the processings of said temporal subband dividing means, said temporal high-frequency subband signal spatially dividing means, said temporal low-frequency subband signal spatially dividing means, and said band signal spatially dividing means are recursively repeated, and each time these processings are repeated, the temporal low-frequency, spatial low-frequency subband and the temporal high-frequency, spatial low-frequency subband are replaced respectively with the temporal low-frequency subband signal and the temporal high-frequency subband signal that are obtained by said temporal subband dividing means immediately thereafter.

**38.** An apparatus for coding a moving picture by performing, a plurality of times, a three-dimensional subband dividing process for performing a motion compensation predicting process on an input picture signal and spatially dividing the input picture signal into subbands, comprising:

motion information calculating means for calculating motion information representative of a motion between frames of the input picture signal and between bands of an intraband signal which is a band signal of one of low-frequency subbands produced by dividing the input picture signal into subbands;
motion compensation predicting means for obtaining a prediction error signal by performing a motion compensation predicting process on the input picture signal and the intraband signal according to the motion information obtained by said motion information calculating means;
prediction error signal spatially dividing means for spatially dividing the prediction error signal into subbands, thereby generating a low-frequency prediction error subband and a high-frequency prediction error subband; and
band signal spatially dividing means for spatially dividing the intraband signal into subbands, thereby generating a low-frequency intrasubband and a high-frequency intrasubband;
wherein said input picture signal is processed by said the motion information calculating means, said motion compensation predicting means, said prediction error signal spatially dividing means, and said band signal spatially dividing means, the low-frequency intrasubband obtained by said band signal spatially dividing means is used as the intraband signal, and the processings of said motion information calculating means, said motion compensation predicting means, said prediction error signal spatially dividing means, and said band signal spatially dividing means are recursively repeated, and each time these processings are repeated, the low-frequency prediction error subband obtained by said prediction error signal spatially dividing means is replaced with the prediction error signal obtained by said motion compensation predicting means immediately thereafter.

**39.** An apparatus for decoding a moving picture by decoding hierarchical coded data, comprising:

hierarchical code decoding means for decoding a higher-layer temporally filtered signal which is produced by a first temporal filtering, a temporally filtered lower-layer signal produced when a temporally filtered signal which is produced by a second temporal filtering is spatially divided into layers, and temporal filtering information representing said second temporal filtering;
temporally filtered higher-layer signal generating means for generating a temporally filtered higher-layer signal from said higher-layer temporally filtered signal and said temporal filtering information; and
temporally filtered signal combining means for combining said temporally filtered higher-layer signal and said temporally filtered lower-layer signal, and thereafter performing inverse transform of said second temporal filtering.

**40.** An apparatus for decoding a moving picture by decoding hierarchical coded data, comprising:

hierarchical code decoding means for decoding a higher-layer prediction error signal which is a signal produced by a first motion compensation predicting process, a prediction error lower-layer signal produced when a prediction error signal which is produced by second motion compensation prediction is spatially divided into layers, and motion information representing said second motion compensation predicting process;
prediction error higher-layer signal generating means for generating a prediction error higher-layer signal from said higher-layer prediction error signal and said motion information; and
motion compensation combining means for combining said prediction error higher-layer signal and said prediction error lower-layer signal, and thereafter performing a combining process based on the second motion compensation.

**41.** An apparatus for decoding a moving picture to obtain a decoded picture by combining layers of hierarchical coded data for each frame and thereafter temporally inverse-filtering the data, comprising:

hierarchical code decoding means for decoding a higher-layer temporally filtered signal which is produced by a first temporal filtering, a temporally filtered lower-layer signal produced when a temporally filtered signal which is produced by a second temporal filtering is spatially divided into layers, and temporal filtering information representing said second temporal filtering;
temporally filtered higher-layer signal generating means for generating a temporally filtered higher-layer signal from said higher-layer temporally filtered signal and said temporal filtering information; and
temporally filtered signal combining means for combining said temporally filtered higher-layer signal and said temporally filtered lower-layer signal to generate a combined temporally filtered signal;

wherein said combined temporally filtered signal is regarded as the higher-layer temporally filtered signal, the processing of said hierarchical code decoding means for decoding temporally filtering information and a temporally filtered lower-layer signal in a layer lower than a layer of interest, the processing of said temporally filtered higher-layer signal generating means, and the processing of said temporally filtered signal combining means are recursively performed, and thereafter a temporally inverse-filtering is performed to obtained the decoded picture.

**42.** An apparatus for decoding a moving picture to obtain a decoded picture by combining layers of hierarchical coded data for each frame and thereafter performing a motion compensation combining process, comprising:

hierarchical code decoding means for decoding a higher-layer prediction error signal which is a signal produced by a first motion compensation prediction, a prediction error lower-layer signal produced when a prediction error signal which is produced by a second motion compensation prediction is spatially divided into layers, and motion information representing said second motion compensation prediction;
prediction error higher-layer signal generating means for generating a prediction error higher-layer signal from said higher-layer prediction error signal and prediction error information; and
prediction error signal combining means for combining said prediction error higher-layer signal and said prediction error lower-layer signal to generate a combined prediction error signal;
wherein said combined prediction error signal is regarded as said higher-layer prediction error signal, the processing of said hierarchical code decoding means for decoding prediction error information and the prediction error lower-layer signal in a layer lower than a layer of interest, the processing of said prediction error higher-layer signal generating means, and the processing of said prediction error signal combining means are recursively performed, and thereafter a motion compensation combining process is performed to obtain the decoded picture.

**43.** An apparatus for decoding a moving picture to generate a decoded picture signal according to a three-dimensional subband combining process for performing spatial subband combination of subband signals for each frame and thereafter performing temporal subband combination of a temporal low-frequency subband and a temporal high-frequency subband, comprising:

temporal high-frequency subband combining means for generating a combined temporal high-frequency subband signal by referring to a temporal high-frequency, spatial low-frequency signal which is a signal of a spatial low-frequency band of a temporal high-frequency subband, and a temporal high-frequency, spatial high-frequency subband which is a subband of a high-frequency band adjacent to the low-frequency signal, and additionally both or either one of a temporal low-frequency, spatial low-frequency subband which is in the same frequency band as the temporal high-frequency, spatial low-frequency signal, and a temporal low-frequency, spatial high-frequency subband which is a subband of a high-frequency band adjacent to the subband signal, and motion information representing a motion compensating process corresponding to said temporal high-frequency subband;
temporal low-frequency subband spatially combining means for combining the temporal low-frequency, spatial low-frequency subband and the temporal low-frequency, spatial high-frequency subband; and
temporally combining means for performing temporal subband combination after the temporal low-frequency subband and the temporal high-frequency subband are processed for a motion compensation predicting process;
wherein the temporal high-frequency, spatial low-frequency signal which is in the lowest frequency band of the temporal high-frequency subband is processed by said temporal high-frequency subband combining means;
the temporal low-frequency, spatial low-frequency subband which is in the lowest frequency band of the temporal low-frequency subband is processed by the temporal low-frequency subband spatially combining means;
a band signal obtained by said temporal high-frequency subband combining means is regarded as a new temporal high-frequency, spatial low-frequency signal, a band signal obtained by said temporal low-frequency subband spatially combining means is regarded as a new temporal low-frequency, spatial low-frequency subband, the processings of said temporal high-frequency subband spatially combining means and said temporal low-frequency subband spatially combining means are recursively repeated, producing the temporal low-frequency subband and the temporal high-frequency subband.

**44.** An apparatus for decoding a moving picture to generate a decoded picture signal according to a three-dimensional subband combining process for performing spatial subband combination of subband signals for each frame and thereafter performing a motion compensating process on a combined intraband signal and a prediction error signal, comprising:

prediction error signal combining means for generating a combined subband prediction error signal by referring to a prediction error low-frequency signal which is a signal of a low-frequency band of the prediction error signal, and a high-frequency prediction error subband which is a subband of a high-frequency band adjacent to the low-frequency signal, and additionally both or either one of a low-frequency intrasubband which is in the same frequency band as the prediction error low-frequency signal, and a high-frequency intrasubband which is a subband of a high-frequency band adjacent to the low-frequency intrasubband, and motion information representing a motion compensating process corresponding to said prediction error signal;
intraband signal spatially combining means for combining the low-frequency intrasubband and the high-frequency intrasubband; and
motion compensation decoding means for performing a motion compensation predicting process on an intraband signal to add the combined prediction error signal thereto, thereby producing the decoded picture signal;
Wherein the prediction error low-frequency signal which is in the lowest frequency band of the prediction error signal is processed by said prediction error signal combining means;
the low-frequency intrasubband which is in the lowest frequency band of the intraband signal is processed by said intraband signal spatially combining means;
the band signal obtained by the prediction error signal combining step is regarded as a new prediction error low-frequency signal, the band signal obtained by the intraband signal spatially combining step is regarded as a new low-frequency intrasubband, the processings of said prediction error signal combining means and said intraband signal spatially combining means are recursively repeated, producing the intraband signal and the prediction error signal.

**45.** A program for enabling a computer to perform hierarchical coding on a moving picture, said program controlling said computer to perform:

a process of performing a first process on an input picture signal and thereafter spatially dividing the input picture signal into layers to obtain a first signal;
a process of reducing said input picture signal With a resolution converting filter and thereafter performing a second process on the input picture signal at a reduced resolution to obtain a second signal; and
a process of coding said first signal and said second signal.

**46.** A program for enabling a computer to perform hierarchical coding on a moving picture, said program controlling said computer to perform:

a process of performing a temporal-spatial hierarchical dividing process to divide an input picture signal into a first signal which is obtained by performing a first process on the input picture signal and thereafter spatially dividing the input picture signal into layers and a second signal which is obtained by performing a second process at a reduced resolution on a reduced input picture signal which is produced when said input picture signal is reduced by a resolution converting filter; and
a process of recursively performing said temporal-spatial hierarchical dividing process on said reduced input picture signal and thereafter coding signals in the respective layers.

**47.** A program for enabling a computer to decode hierarchical coded moving picture data, said program controlling said computer to perform:

a process of decoding a first signal processed by a first process, a third signal produced when a second signal produced from a second process is spatially divided into layers, and processing information representing said second process;
a process of generating a fourth signal from said first signal and said processing information; and
a process of combining said third signal and said fourth signal with each other and thereafter performing inverse transform of said second process to obtain a decoded picture.

**48.** A program for enabling a computer to decode hierarchical coded moving picture data, said program controlling said computer to perform:

a process of decoding a higher-layer temporally filtered signal which is produced by a first temporal filtering, a temporally filtered lower-layer signal produced when a temporally filtered signal which is produced by a second temporal filtering is spatially divided into layers, and temporal filtering information representing said second temporal filtering;

a process of generating a temporally filtered higher-layer signal from said higher-layer temporally filtered signal and said temporal filtering information;
a process of performing a temporally filtered signal combining process to combine said temporally filtered higher-layer signal and said temporally filtered lower-layer signal to generate a combined temporally filtered signal; and
a process of producing a decoded picture by regarding said combined temporally filtered signal as the higher-layer temporally filtered signal, decoding the temporal filtering information and the temporally filtered lower-layer signal in a layer lower than a layer of interest, recursively performing the temporally filtered signal combining process, and thereafter performing a temporally inverse-filtering.

**49.** A program for enabling a computer to decode hierarchical coded moving picture data, said program controlling said computer to perform:

a process of decoding a higher-layer prediction error signal which is a signal produced by a first motion compensation prediction, a prediction error lower-layer signal produced when a prediction error signal which is produced by a second motion compensation prediction is spatially divided into layers in one level, and motion information representing said second motion compensation prediction;
a process of generating a prediction error higher-layer signal from said higher-layer prediction error signal and said motion information;
a process of performing a prediction error signal combining process to combine said prediction error higher-layer signal and said prediction error lower-layer signal to generate a combined prediction error signal; and
a process of producing a decoded picture by regarding said combined prediction error signal as the higher-layer prediction error signal, decoding the motion information and the prediction error lower-layer signal in a layer lower than a layer of interest, recursively performing the prediction error combining process, and thereafter performing a motion compensation combining process.

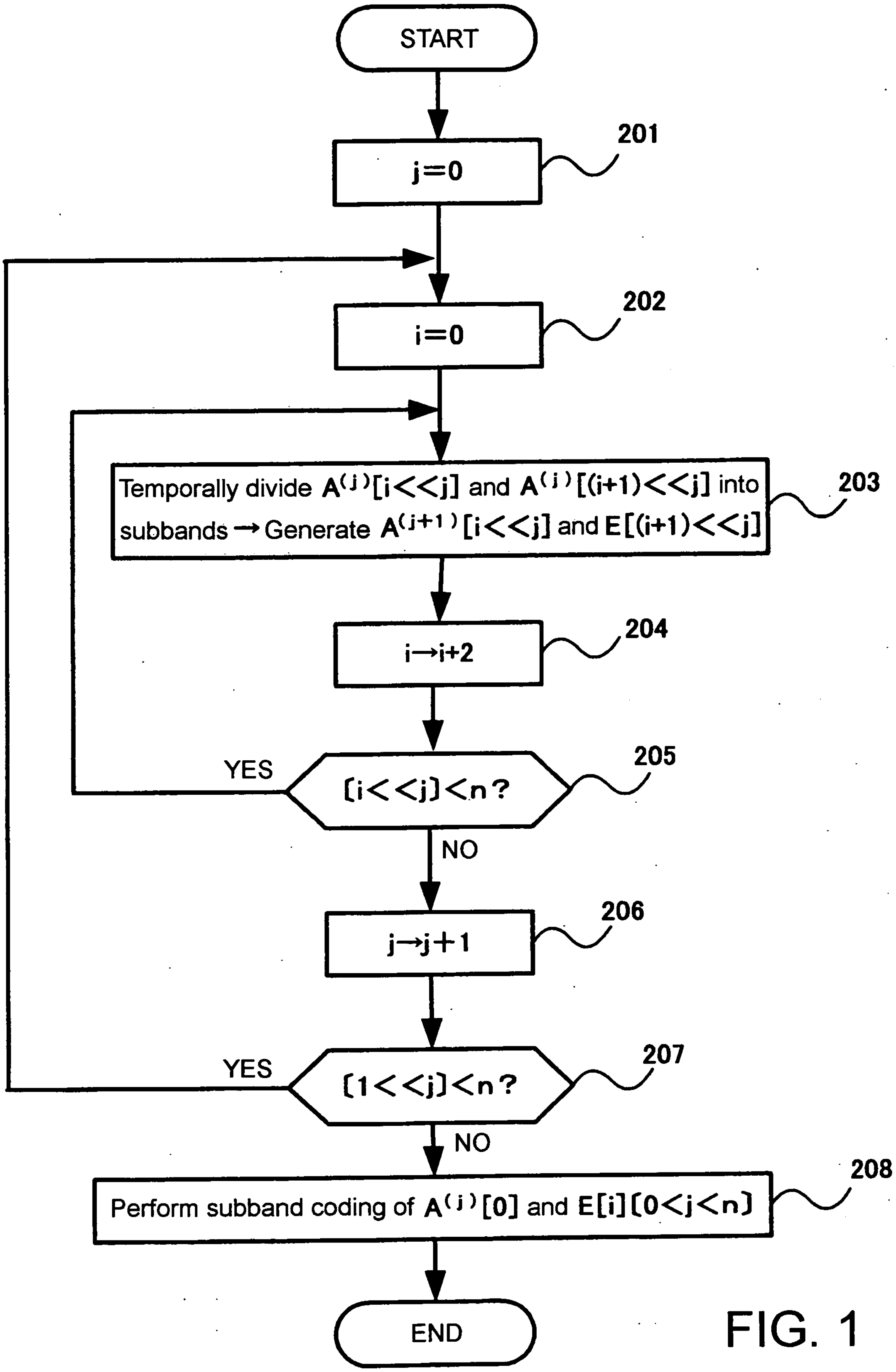
START
j=0
201
i=0
202
Temporally divide A(j)[i<<j] and A(j)[(i+1)<<j] into subbands → Generate A(j+1)[i<<j] and E[(i+1)<<j]
203
i→i+2
204
[i<<j]<n?
205
YES
NO
j→j+1
206
[1<<j]<n?
207
YES
NO
Perform subband coding of A(j)[0] and E[i][0<j<n]
208
END

FIG. 1

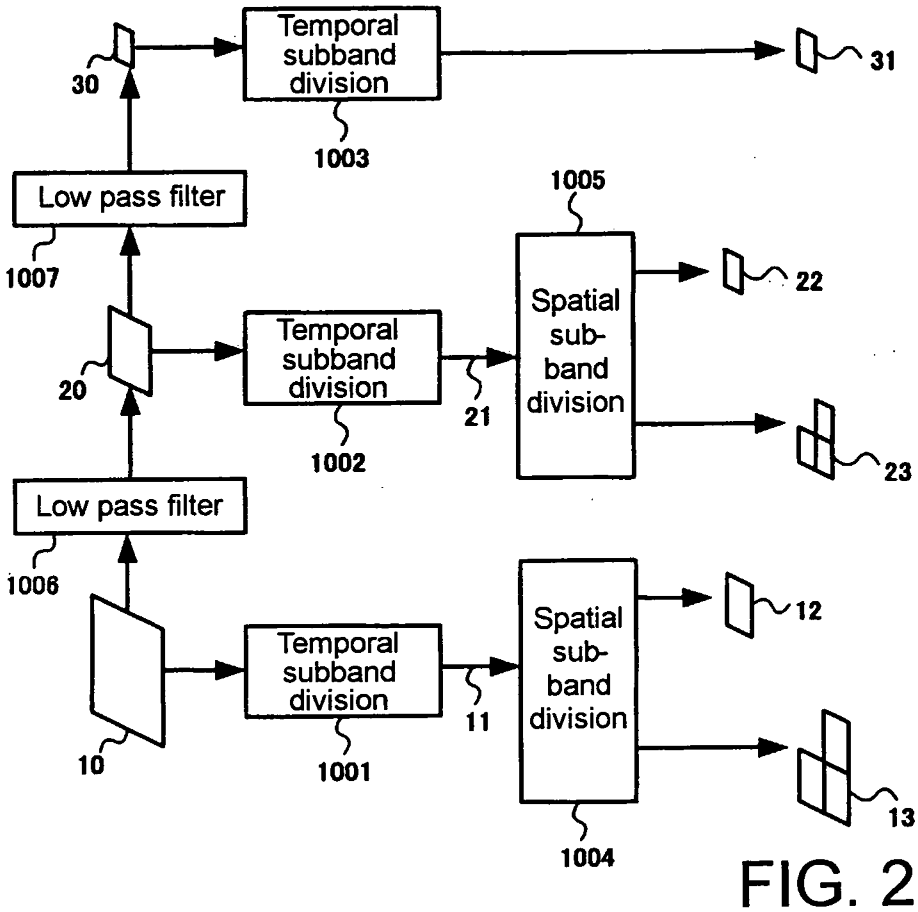
Temporal subband division
1003
31
30
Low pass filter
1007
1005
Spatial sub-band division
22
20
Temporal subband division
21
23
1002
Low pass filter
1006
Spatial sub-band division
12
Temporal subband division
11
10
1001
13
1004

FIG. 2

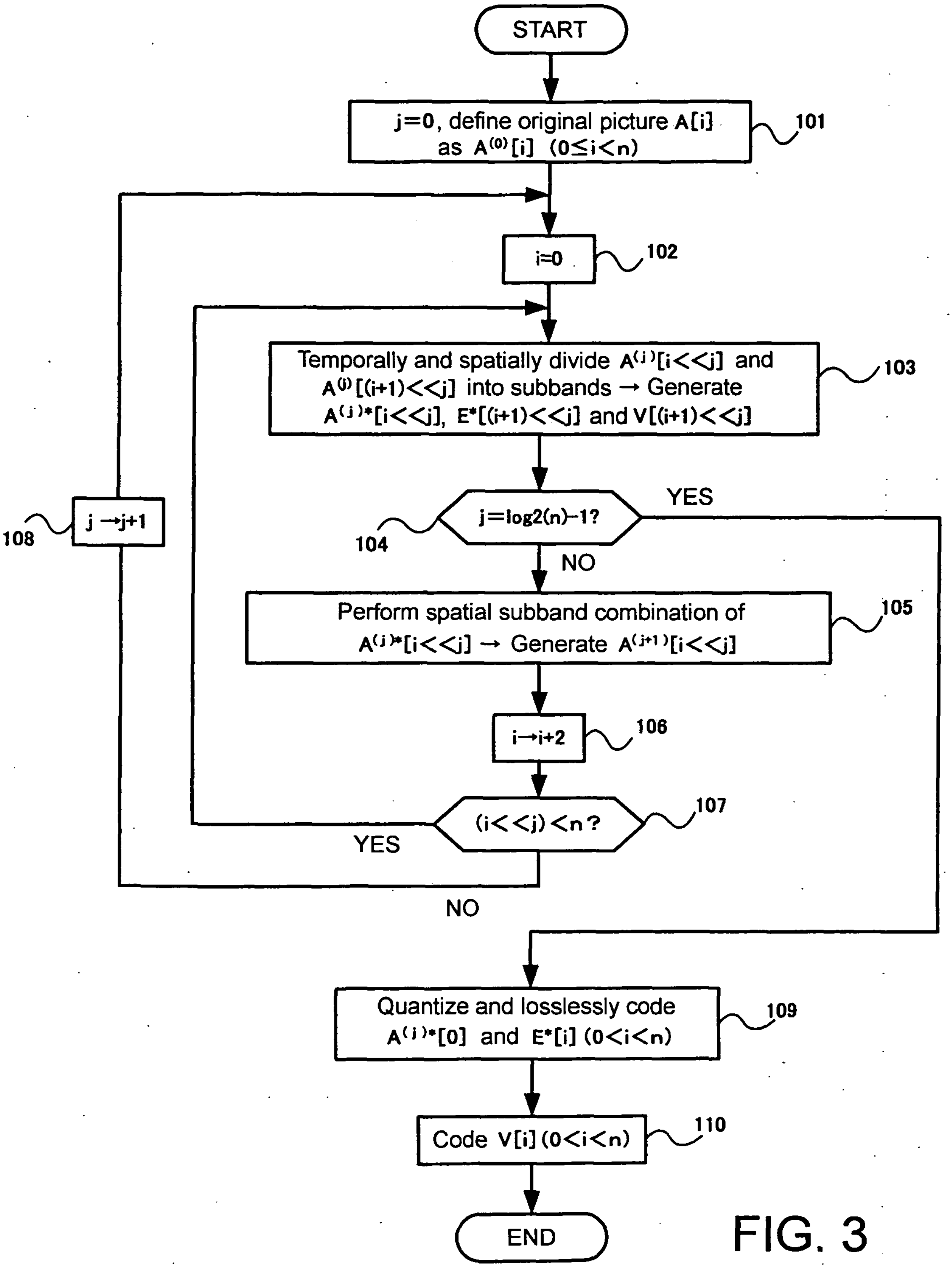
START
j=0, define original picture A[i] as A(0)[i] (0≤i<n)
101
i=0
102
Temporally and spatially divide A(j)[i<<j] and A(j)[(i+1)<<j] into subbands → Generate A(j)*[i<<j], E*[(i+1)<<j] and V[(i+1)<<j]
103
j=log2(n)-1?
104
YES
NO
Perform spatial subband combination of A(j)*[i<<j] → Generate A(j+1)[i<<j]
105
i→i+2
106
(i<<j)<n?
107
YES
NO
j→j+1
108
Quantize and losslessly code A(j)*[0] and E*[i] (0<i<n)
109
Code V[i] (0<i<n)
110
END

FIG. 3

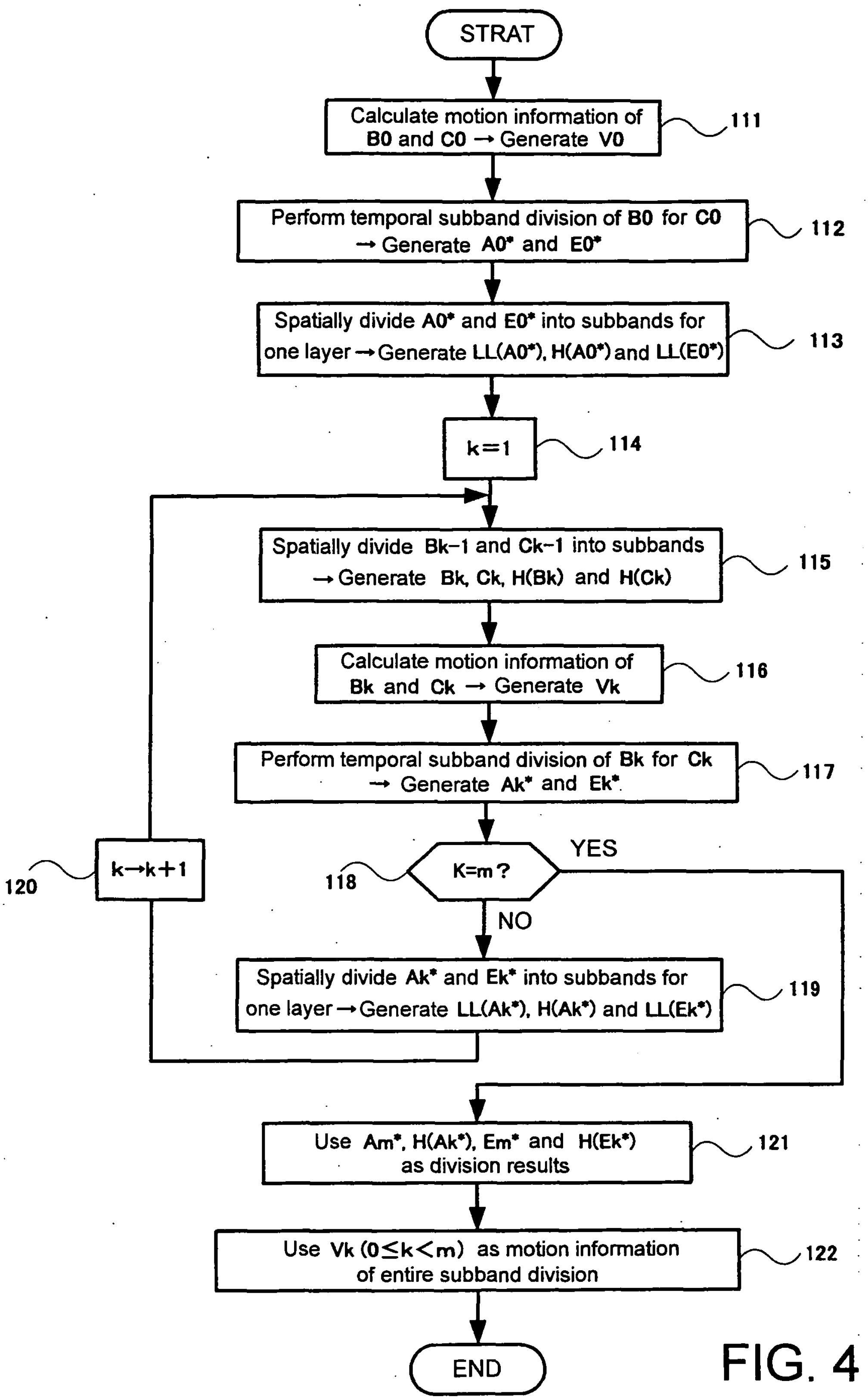
STRAT
Calculate motion information of B0 and C0 → Generate V0
111
Perform temporal subband division of B0 for C0 → Generate A0* and E0*
112
Spatially divide A0* and E0* into subbands for one layer → Generate LL(A0*), H(A0*) and LL(E0*)
113
k=1
114
Spatially divide Bk-1 and Ck-1 into subbands → Generate Bk, Ck, H(Bk) and H(Ck)
115
Calculate motion information of Bk and Ck → Generate Vk
116
Perform temporal subband division of Bk for Ck → Generate Ak* and Ek*
117
K=m ?
118
YES
NO
k→k+1
120
Spatially divide Ak* and Ek* into subbands for one layer → Generate LL(Ak*), H(Ak*) and LL(Ek*)
119
Use Am*, H(Ak*), Em* and H(Ek*) as division results
121
Use Vk (0≤k<m) as motion information of entire subband division
122
END

FIG. 4

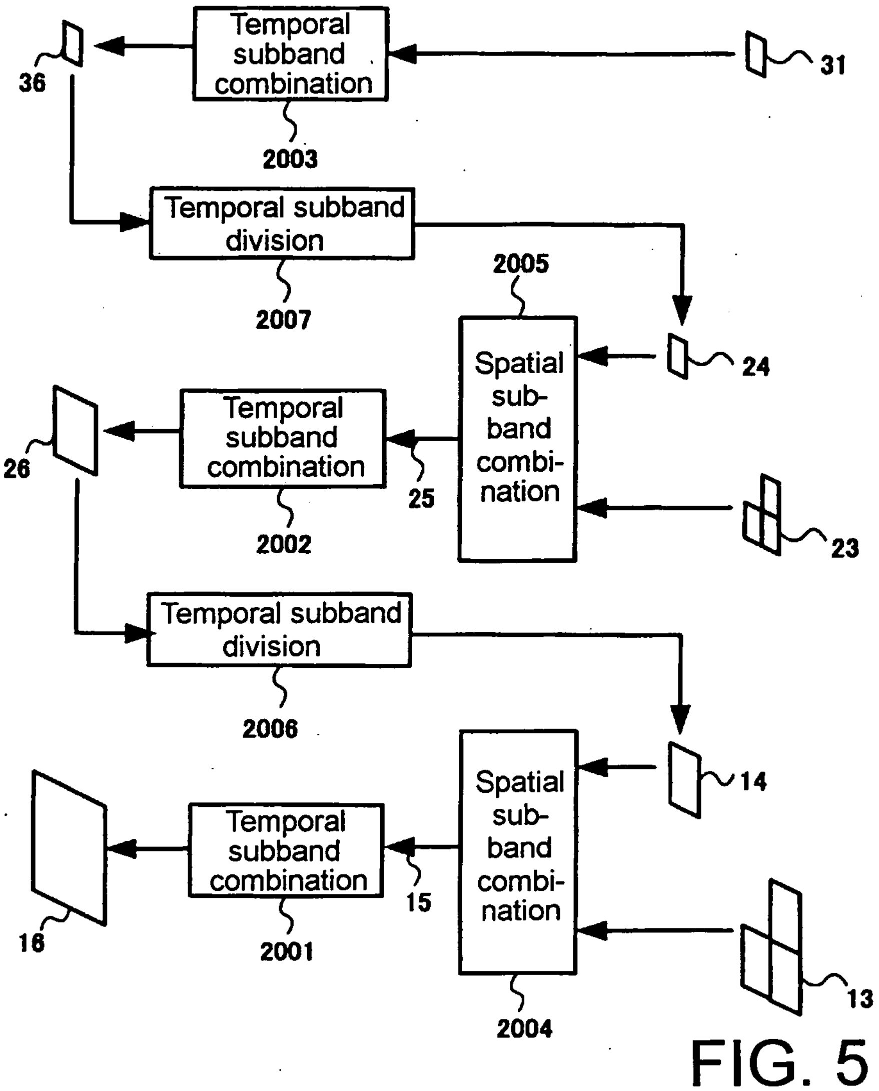
Temporal subband combination
31
36
2003
Temporal subband division
2007
2005
Spatial sub-band combi-nation
24
Temporal subband combination
26
25
2002
23
Temporal subband division
2006
Spatial sub-band combi-nation
14
Temporal subband combination
15
16
2001
13
2004

FIG. 5

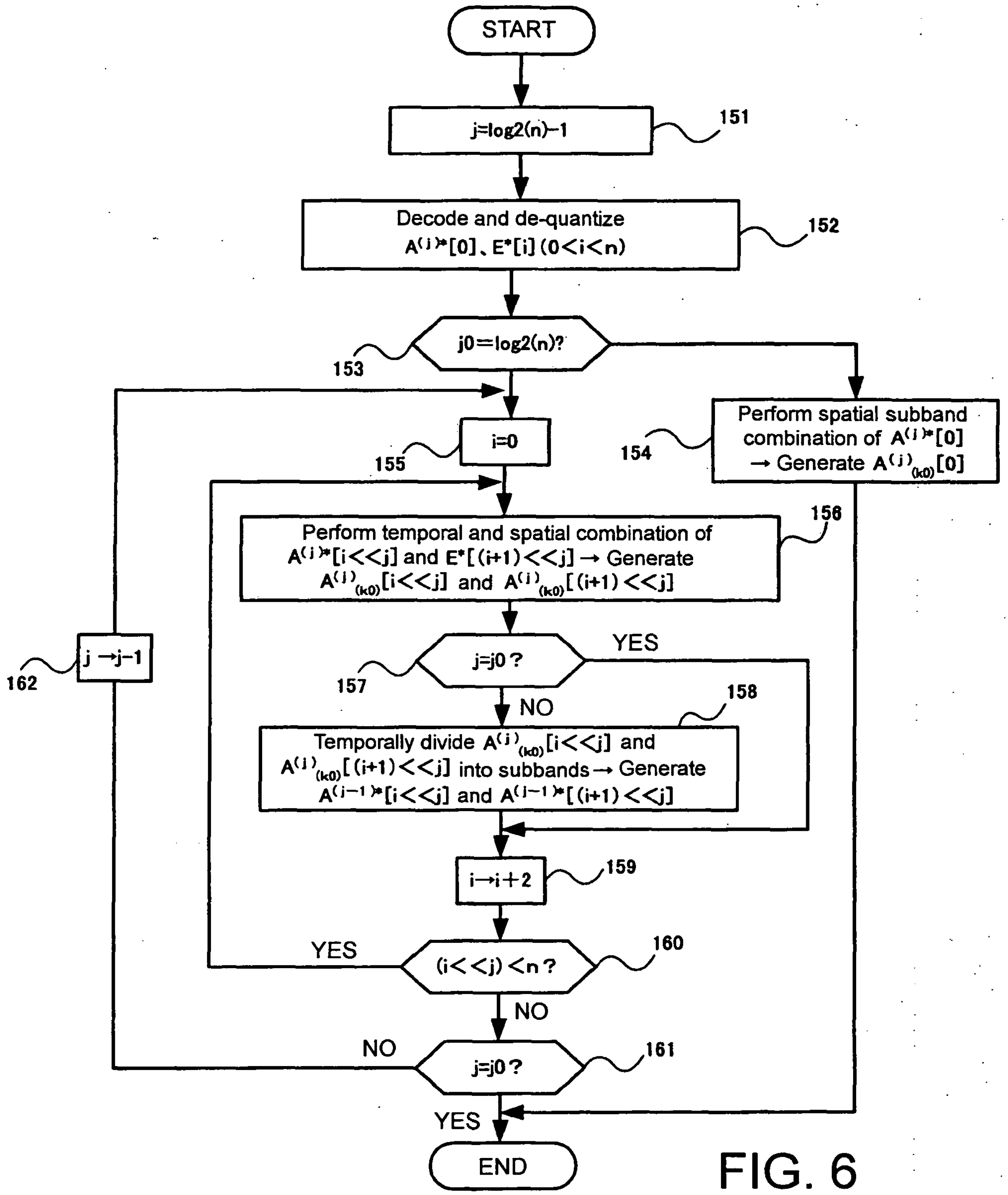
START
j=log2(n)-1
151
Decode and de-quantize
A(j)*[0]、E*[i] (0<i<n)
152
j0=log2(n)?
153
Perform spatial subband combination of A(j)*[0]
→ Generate A(j)(k0)[0]
154
i=0
155
Perform temporal and spatial combination of A(j)*[i<<j] and E*[(i+1)<<j] → Generate A(j)(k0)[i<<j] and A(j)(k0)[(i+1)<<j]
156
j=j0 ?
157
YES
NO
Temporally divide A(j)(k0)[i<<j] and A(j)(k0)[(i+1)<<j] into subbands → Generate A(j-1)*[i<<j] and A(j-1)*[(i+1)<<j]
158
i→i+2
159
(i<<j)<n ?
160
YES
NO
j=j0 ?
161
NO
YES
j →j-1
162
END

FIG. 6

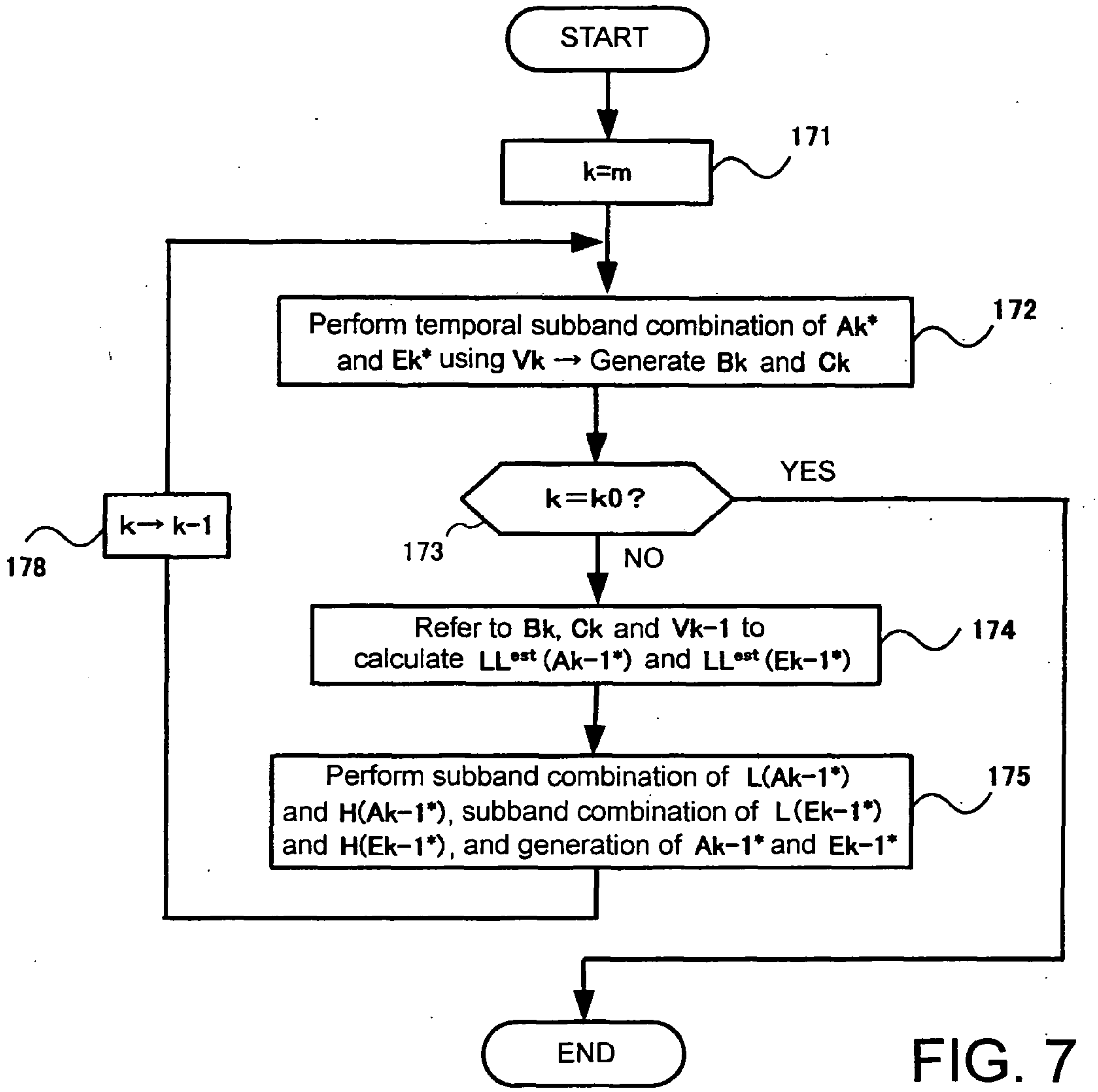
START
k=m
171
Perform temporal subband combination of Ak* and Ek* using Vk → Generate Bk and Ck
172
k=k0?
173
YES
NO
Refer to Bk, Ck and Vk-1 to calculate LL^est (Ak-1*) and LL^est (Ek-1*)
174
Perform subband combination of L(Ak-1*) and H(Ak-1*), subband combination of L(Ek-1*) and H(Ek-1*), and generation of Ak-1* and Ek-1*
175
k→ k-1
178
END

FIG. 7

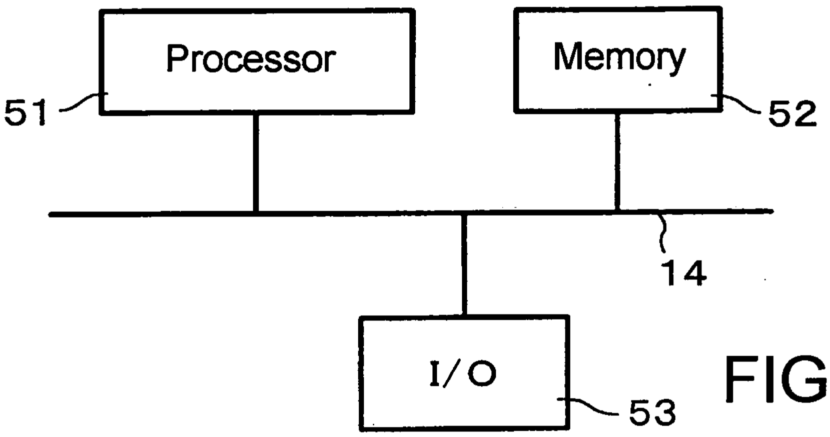


FIG. 8

## INTERNATIONAL SEARCH REPORT

International application No.
PCT/JP2004/018152

A. CLASSIFICATION OF SUBJECT MATTER
Int.Cl[7] H04N7/32

According to International Patent Classification (IPC) or to both national classification and IPC

B. FIELDS SEARCHED

Minimum documentation searched (classification system followed by classification symbols)
Int.Cl[7] H04N7/12, H04N7/24-7/68

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
JSTPlus FILE(JOIS), IEEE Xplore

C. DOCUMENTS CONSIDERED TO BE RELEVANT

| Category* | Citation of document, with indication, where appropriate, of the relevant passages | Relevant to claim No. |
|---|---|---|
| X | Takahiro KIMOTO, Yoshihiro MIYAMOTO, "MC Mismatch no Drift Mondai o Kanzenni Kaisho suru Sanjigen Wavelet Fugoka", 2003 Nen Gazo Fugoka Symposium (PCSJ2003), 2003.11, pages 51 to 52 | 1-49 |
| A | WO 01/84847 A1 (KONINKLIJKE PHILIPS ELECTRONICS N.V.), 08 November, 2001 (08.11.01), Full text; all drawings & EP 1285535 A1 & US 2002/15443 A1 & CN 1372770 A & KR 2002-30073 A | 1-49 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 January, 2005 (13.01.05) | 01 February, 2005 (01.02.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.
PCT/JP2004/018152

C (Continuation). DOCUMENTS CONSIDERED TO BE RELEVANT

| Category* | Citation of document, with indication, where appropriate, of the relevant passages | Relevant to claim No. |
|---|---|---|
| A | WO 01/6794 A1 (KONINKLIJKE PHILIPS ELECTRONICS N.V.), 25 January, 2001 (25.01.01), Full text; all drawings & EP 1114555 A1 & US 6519284 B1 & CN 1322442 A & KR 2001-75232 A | 1-49 |
| A | JP 9-98434 A (Toshiba Corp.), 08 April, 1997 (08.04.97), Full text; all drawings (Family: none) | 1-49 |
| A | Jo Yew Tham, Surendra Ranganath, Ashraf A. Kassim, Highly Scalable Wavelet-Based Video Codec for Very Low Bit-Rate Environment, IEEE JOURNAL ON SELECTED AREAS IN COMMUNICATIONS, Vol.16, No.1, 1998.01, pages 12 to 27 | 1-49 |
| A | John W. Woods, Gary Lilienfield, A Resolution and Frame-Rate Scalable Subband/Wavelet Video Coder, IEEE TRANSACTIONS ON CIRCUITS AND SYSTEMS FOR VIDEO TECHNOLOGY, Vol.11, No.9, 2001.09, pages 1035 to 1044 | 1-49 |
| A | Vincent Bottreau, Marion Benetiere, Boris Felts, Beatrice Pesquet-Popescu, A FULLY SCALABLE 3D SUBBAND VIDEO CODEC, 2001 International Conference on Image Processing, Vol.2, 2001.10, pages 1017 to 1020 | 1-49 |
| A | Patrizio Campisi, Mauro Gentile, Alessandro Neri, Three Dimensional Wavelet Based Approach for a Scalable Video Conference System, 1999 International Conference on Image Processing, Vol.3, 1999.10, pages 802 to 806 | 1-49 |
| P,A | Takahiro KIMOTO, Yoshihiro MIYAMOTO, "Taju Kaiso Jikan Filtering o Mochiiru Sanjigen Wavelet Fugoka", 2004 Nen Gazo Fugoka Symposium (PCSJ2004), 2004.11, pages 33 to 34 | 1-49 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **J. R. OHM.** Three-dimensional subband coding with motion compensation. *IEEE Trans. Image Processing,* September 1999, vol. 3, 559-571
- **A. SECKER et al.** Motion-compensated highly scalable video compression using an adaptive 3D wavelet transform based on lifting. *IEEE Trans. Int. Conf. Image Proc.,* October 2001, 1029-1032
- **L. LIO et al.** Motion Compensated Lifting Wavelet And Its Application in Video Coding. *IEEE Int. Conf. Multimedia & Expo 2001,* August 2001
- **J. M. SHAPIRO.** Embedded image coding using zerotrees of wavelets coefficients. *IEEE Trans. Signal Processing,* December 1993, vol. 41, 3445-3462